(19) Europäisches Patentamt
European Patent Office
Office européen des brevets

(11) Veröffentlichungsnummer: **0 062 607**
B1

(12) **EUROPÄISCHE PATENTSCHRIFT**

(45) Veröffentlichungstag der Patentschrift: **23.04.86**

(51) Int. Cl.⁴: **C 09 B 29/01** // D06P1/06

(21) Anmeldenummer: **82810131.1**

(22) Anmeldetag: **22.03.82**

(54) **Monoazofarbstoffe, deren Herstellung und Verwendung.**

(30) Priorität: **27.03.81 CH 2096/81**

(43) Veröffentlichungstag der Anmeldung: **13.10.82 Patentblatt 82/41**

(45) Bekanntmachung des Hinweises auf die Patenterteilung: **23.04.86 Patentblatt 86/17**

(84) Benannte Vertragsstaaten: **CH DE FR GB LI**

(56) Entgegenhaltungen:
**CH - A - 100 855**
**CH - A - 100 857**
**DE - C - 648 769**
**FR - A - 871 731**
**FR - A - 1 221 165**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Hurter, Rudolf, Laufenburgerstrasse 10/3, CH-4058 Basel (CH)**

**EP 0 062 607 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die der vorliegenden Erfindung zugrunde liegende Aufgabe war es, neue Monoazofarbstoffe zu finden, die zum Färben von natürlichen und synthetischen Polyamiden aus wässrigem Bad geeignet sind, die ferner Nuancen im Bereich Gelb bis Rot haben, und die ausserdem verbesserte Echtheitseigenschaften, insbesondere in der Lichtechtheit, aufweisen.

Es wurde nun gefunden, dass die Monoazofarbstoffe der Formel (1) den genannten Anforderungen genügen.

Gegenstand der vorliegenden Erfindung sind somit Monoazofarbstoffe der Formel

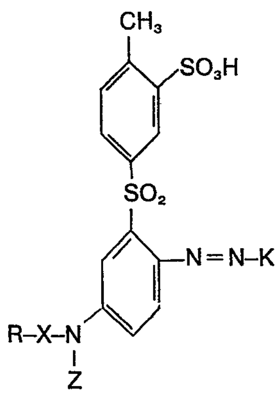

(1),

worin K der Rest einer Kupplungskomponente der Aminobenzol-, Alkoxybenzol-, Hydroxybenzol-, Pyrazolon-, Aminopyrazol-, Pyrimidin-, Indol- oder Acetessigsäureamidreihe, R ein gegebenenfalls substituierter $C_{1-12}$-Alkyl-, Cycloalkyl-, Aralkyl- oder Arylrest, X eine –CO– oder –$SO_2$-Gruppe, eine

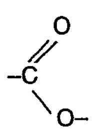

Gruppe,

wobei R an das Sauerstoffatom gebunden ist, oder eine –$SO_2$NH– oder

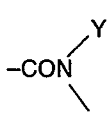

-Gruppe,

wobei R an das Stickstoffatom gebunden ist, Y Wasserstoff oder $C_{1-4}$-Alkyl ist und Z Wasserstoff oder $C_{1-4}$-Alkyl ist.

Der Rest K kann die bei Azofarbstoffen üblichen Substituenten enthalten, z.B. Alkylgruppen mit 1 bis 4 Kohlenstoffatomen, wie Methyl, Äthyl, Propyl, Isopropyl, Butyl, Isobutyl, sek.-Butyl und tert.-Butyl, Alkoxygruppen mit 1 bis 4 Kohlenstoffatomen, wie Methoxy, Äthoxy, Propyloxy, Isopropyloxy, Butyloxy, Isobutyloxy, sek.-Butyloxy und tert.-Butyloxy, Phenoxy, Alkanoylaminogruppen mit 1 bis 6 Kohlenstoffatomen, wie Acetylamino oder Propionylamino, Benzoylamino, Aminogruppen, wie –$NH_2$, Methylamino, Äthylamino, Dimethylamino, Diäthylamino, Cyanäthylamino, Hydroxyäthylamino, Di-hydroxyäthylamino, Cyclohexylamino, Benzylamino und Phenylamino, Carbonsäureestergruppen, wie Methoxycarbonyl und Äthoxycarbonyl, Trifluormethyl, Nitro, Cyan, Acetyl, Methylsulfonyl, Carbamoyl, Sulfamoyl, Ureido, Hydroxy, Carboxy, Sulfo, Sulfomethyl und Halogen, wie Fluor, Chlor und Brom.

Falls R ein $C_{1-12}$-Alkylrest ist, handelt es sich um einen geradkettig oder verzweigten Alkylrest, der weitersubstituiert sein kann, z.B. durch Halogen, wie Fluor, Chlor oder Brom, Hydroxy, Sulfato, Sulfo, Carboxy, Cyano, $C_{1-4}$-Alkoxy, wie Methoxy, Äthoxy, Propoxy, Isopropoxy, Butoxy, sek.-Butoxy, tert.-Butoxy oder Isobutoxy, und Alkanoylgruppen mit 1 bis 6 Kohlenstoffatomen, wie die Acetyl- oder Propionylgruppe, und die Benzoylgruppe. Als Beispiele für R als $C_{1-12}$-Alkylrest seien genannt: Methyl, Äthyl, β-Chloräthyl, β-Hydroxyäthyl, β-Cyanäthyl, Propyl, Isopropyl, 2-Oxopropyl, n-Butyl, Isobutyl, sek.-Butyl, tert.-Butyl, Pentyl-(3), Heptyl-(3) und Dodecyl.

Vorzugsweise ist R ein gegebenenfalls substituierter $C_{1-7}$-Alkylrest.

Bedeutet R einen Cycloalkylrest, so kommen beispielsweise Cycloalkylgruppen mit vorzugsweise 5- oder 6-gliedrigen Ringen, besonders die Cyclohexylgruppe, in Betracht.

Bedeutet R einen Aralkylrest, so handelt es sich vorzugsweise um $C_{1-4}$-Alkyl-phenyl- oder -naphthylreste, wie beispielsweise den Benzyl- oder Phenäthylrest.

Bedeutet R einen Arylrest, so gehört dieser vorzugsweise der Benzol- oder Naphthalinreihe an, er kann weitersubstituiert sein, beispielsweise durch $C_{1-4}$-Alkylgruppen, wie Methyl, $C_{1-4}$-Alkoxygruppen wie Methoxy und Äthoxy, Halogen, wie Fluor, Chlor oder Brom, Alkanoylaminogruppen mit 1 bis 6 Kohlenstoffatomen, wie Acetylamino, Hydroxy und Carboxy. Insbesondere ist R als Arylrest ein gegebenenfalls substituierter Phenylrest.

Bedeutet X eine

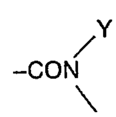

-Gruppe,

so ist Y Wasserstoff oder $C_{1-4}$-Alkyl, wie Methyl, Äthyl, Propyl, Isopropyl, Butyl, Isobutyl, sek.-Butyl oder tert.-Butyl, vorzugsweise ist Y Wasserstoff, Methyl oder Äthyl.

Bedeutet Z einen $C_{1-4}$-Alkylrest, so kommt beispielsweise ein Methyl-, Äthyl-, Propyl-, Isopropyl- oder Butylrest in Betracht. Vorzugsweise ist Z Wasserstoff.

Bevorzugt sind Monoazofarbstoffe der Formel (1), worin K ein Amino-, N-$C_{1-4}$-alkylamino- oder N,N-di-$C_{1-4}$-alkylamino-benzolrest, der im Benzolring durch Methyl, Methoxy, Chlor, Acetylamino, Ureido, Benzoylamino, Chlorbenzoylamino und Methylphenylsulfonylamino substituiert sein kann, und worin die N-Alkylreste unabhängig voneinander durch Hydroxy, Chlor, Cyano, Sulfo oder

Phenyl substituiert sein können, ein $C_{1-2}$-Alkoxybenzolrest, der durch Methyl substituiert sein kann, ein 2-Methylindol-, 2-Phenylindol-, N-Octyl-2-methylindol- oder N-Methyl-2-phenylindolrest, ein 1-Phenyl-3-methylpyrazolonrest, der im Phenylrest durch Chlor und Methyl substituiert sein kann, ein 1-Phenyl-3-methyl-aminopyrazolrest, der im Phenylrest durch Chlor und Sulfo substituiert sein kann, oder ein 2,4,6-Triaminopyrimidinrest ist, und worin R $C_{1-7}$-Alkyl, das durch Chlor, Hydroxy, Methoxy oder Acetyl substituiert sein kann, Cyclohexyl, Benzyl oder Phenyl, das durch Methyl, Hydroxy, Chlor, Carboxy oder Acetylamino substituiert sein kann, X eine –CO– oder –$SO_2$-Gruppe, eine

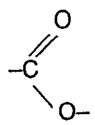 Gruppe,

wobei R an das Sauerstoffatom gebunden ist, oder eine –$SO_2$NH- oder

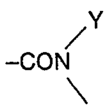 -Gruppe,

wobei R an das Stickstoffatom gebunden ist, Y Wasserstoff, Methyl oder Äthyl ist und Z Wasserstoff ist.

Bevorzugt sind insbesondere die Monoazofarbstoffe der Formel (1), worin K ein 4-N,N-Diäthylamino-2-methylphenyl-(1)-rest oder ein 2-Methylindol-(3)-rest, R Äthyl, β-Chloräthyl, tert.-Butyl, Phenyl oder 4-Methylphenyl und X die –CO– oder –$SO_2$-Gruppe ist und Z Wasserstoff ist.

Wertvolle Vertreter dieser Klasse sind die Monoazofarbstoffe der Formeln

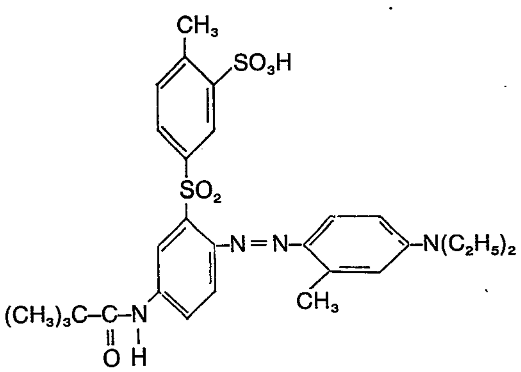 (2),

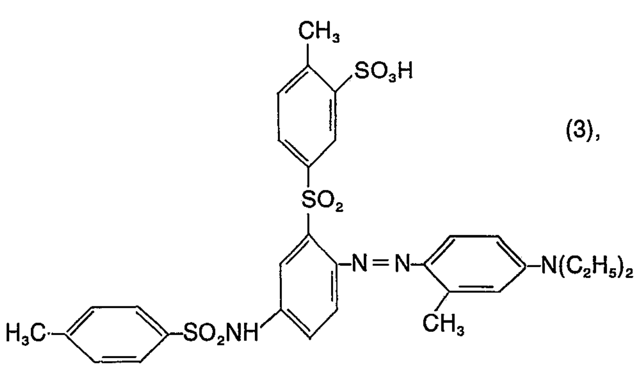 (3),

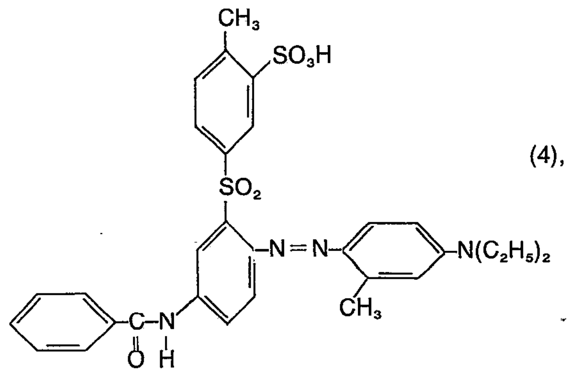 (4),

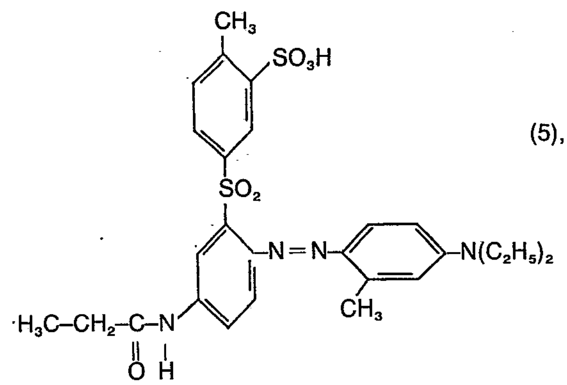 (5),

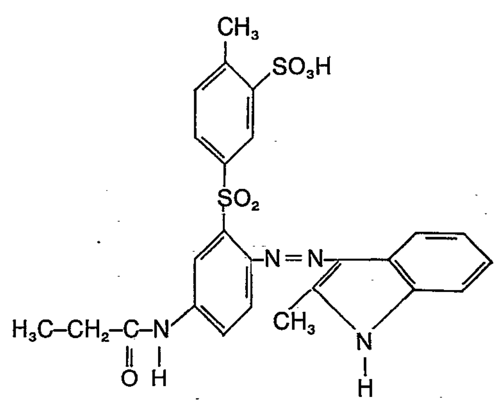 (6),

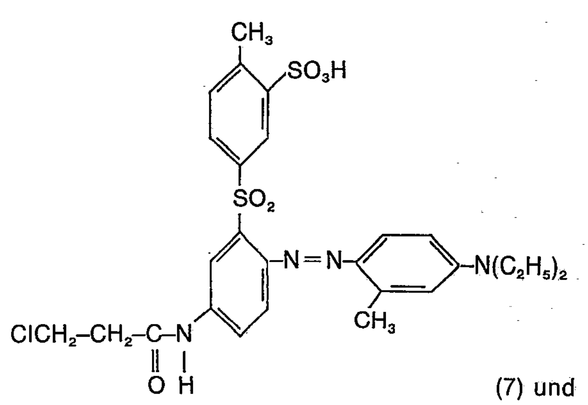 (7) und

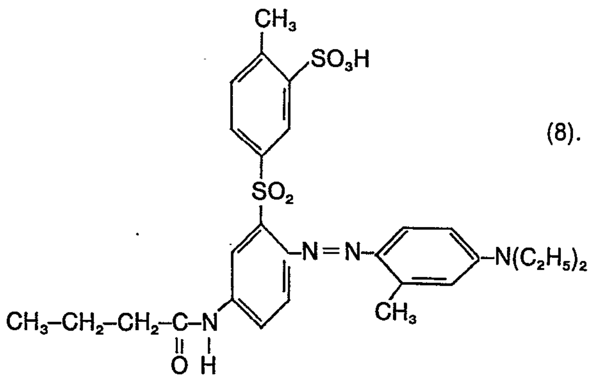

(8).

Gegenstand der Erfindung ist ferner ein Verfahren zur Herstellung der Monoazofarbstoffe der Formel (1). Das Verfahren ist dadurch gekennzeichnet, dass man eine Diazokomponente der Formel

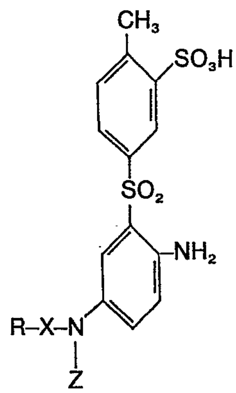

(9)

diazotiert und auf eine Kupplungskomponente der Formel

H–K (10)

kuppelt, wobei K, R, X und Z in den Formeln (9) und (10) die unter Formel (1) angegebenen Bedeutungen haben.

Die Diazotierung der Diazokomponenten der Formel (9) erfolgt in der Regel durch Einwirkung salpetriger Säure in wässrig-mineralsaurer Lösung bei tiefer Temperatur, die Kupplung auf die Kupplungskomponente der Formel (10) bei sauren, neutralen bis alkalischen pH-Werten.

In der so erhaltenen Monoazoverbindung der Formel (1) kann die Gruppe R–X gegebenenfalls durch Umacylierung variiert werden, indem man die Monoazoverbindung der Formel (1) hydrolysiert und anschliessend mit einer Verbindung, die eine andere Gruppe R–X einführt, umsetzt.

Gegebenenfalls kann eine freie Aminogruppe im Rest K nach der Kupplung mit einem Acylierungs- oder Alkylierungsmittel in eine Acylamino- oder Alkylaminogruppe umgewandelt werden, und ebenso kann eine Hydroxygruppe im Rest K durch Alkylierung in eine Alkoxygruppe übergeführt werden.

Als Kupplungskomponente der Formel (10) verwendet man vorzugsweise Amino- oder Alkylaminobenzol, Phenol, Pyrazolon, Aminopyrazol, Pyrimidin, Indol oder Acetessigsäureamid, wobei die genannten Kupplungskomponenten weitersubstituiert sein können, und gegebenenfalls kann die phenolische Hydroxygruppe nach der Kupplung durch Alkylierung in eine Alkoxygruppe übergeführt werden.

Eine weitere bevorzugte Ausführungsform ist dadurch gekennzeichnet, dass man eine Diazokomponente der Formel (9), worin R $C_{1-7}$-Alkyl, das durch Chlor, Hydroxy, Methoxy oder Acetyl substituiert sein kann, Cyclohexyl, Benzyl oder Phenyl, das durch Methyl, Hydroxy, Chlor, Carboxy oder Acetylamino substituiert sein kann, X eine –CO– oder $-SO_2$-Gruppe, eine

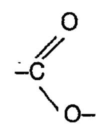 Gruppe,

wobei R an das Sauerstoffatom gebunden ist, oder eine $-SO_2NH-$ oder

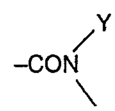 -Gruppe,

wobei R an das Stickstoffatom gebunden ist, Y Wasserstoff, Methyl oder Äthyl, und Z Wasserstoff ist, diazotiert und auf eine Kupplungskomponente der Formel (10), worin K ein Amino-, N-$C_{1-4}$-alkylamino- oder N,N-di-$C_{1-4}$-alkylaminobenzolrest, der im Benzolring durch Methyl, Methoxy, Chlor, Acetylamino, Ureido, Benzoylamino, Chlorbenzoylamino und Methylphenylsulfonylamino substituiert sein kann, und worin die N-Alkylreste unabhängig voneinander durch Hydroxy, Chlor, Cyano, Sulfo oder Phenyl substituiert sein können, ein Phenolrest, der durch Methyl substituiert sein kann, wobei die phenolische Hydroxygruppe nach der Kupplung in eine $C_{1-2}$-Alkoxygruppe übergeführt wird, ein 2-Methylindol-, N-Octyl-2-methylindol- oder N-Methyl-2-phenylindolrest, ein 1-Phenyl-3-methylpyrazolonrest, der im Phenylrest durch Chlor und Methyl substituiert sein kann, ein 1-Phenyl-3-methylaminopyrazolrest, der im Phenylrest durch Chlor und Sulfo substituiert sein kann, oder ein 2,4,6-Triaminopyrimidinrest ist, kuppelt.

Die besonders bevorzugten Monoazofarbstoffe der Formel (1) werden hergestellt, indem man eine Diazokomponente der Formel (9), worin R Äthyl, β-Chloräthyl, tert.-Butyl, Phenyl oder 4-Methylphenyl, X die –CO– oder $-SO_2$-Gruppe und Z Wasserstoff ist, diazotiert und in 4-Stellung auf 3-Methyl-N,N-diäthylanilin oder in 3-Stellung auf 2-Methylindol kuppelt.

Die besonders wertvollen Monoazofarbstoffe der Formeln (2) bis (8) werden hergestellt, indem man für den Farbstoff der Formel (2)

2-Amino-5-pivaloylamino-1,1'-diphenylsulfon-4'-methyl-3'-sulfonsäure,

für den Farbstoff der Formel (3)

2-Amino-5-p-tolylsulfonylamino-1,1'-diphenylsulfon-4'-methyl-3'-sulfonsäure,

für den Farbstoff der Formel (4)
2-Amino-5-benzoylamino-1,1'-diphenylsulfon-4'-methyl-3'-sulfonsäure,
für den Farbstoff der Formel (5)
2-Amino-5-propionylamino-1,1'-diphenylsulfon-4'-methyl-3'-sulfonsäure,
für den Farbstoff der Formel (7)
2-Amino-5-(3'-chlorpropionylamino)-1,1''-diphenylsulfon-4''-methyl-3''-sulfonsäure
oder für den Farbstoff der Formel (8)
2-Amino-5-butyrylamino-1,1'-diphenylsulfon-4'-methyl-3'-sulfonsäure
diazotiert und auf 3-Methyl-N,N-diäthylanilin in 4-Stellung kuppelt, oder indem man für den Farbstoff der Formel (6)
2-Amino-5-propionylamino-1,1'-diphenylsulfon-4'-methyl-3'-sulfonsäure
diazotiert und auf 2-Methylindol in 3-Stellung kuppelt.

Die Kupplungskomponenten der Formel (10) sind bekannt und werden nach bekannten Methoden hergestellt. Aus der grossen Zahl möglicher Kupplungskomponenten seien folgende als Beispiele genannt:
Anilin, Dimethylanilin, Diäthylanilin,
3-Methyl-dimethylanilin,
3-Methyl-diäthylanilin,
3-Acetylamino- oder 3-Methoxycarbonylamino- oder 3-Ureido-dimethylanilin,
3-Methyl-6-methoxy-diäthylanilin,
2,5-Dimethoxy-diäthylanilin,
N-Äthyl-N-benzylanilin,
N-Äthyl-N-(β-cyanäthyl)-anilin,
N-Äthyl-N-(β-hydroxyäthyl)-anilin,
N-Äthyl-N-(β-acetoxyäthyl)-anilin,
N,N-Dibutylanilin,
3-Acetylamino-N,N-diäthylanilin,
N-Methyl-N-(β-cyanäthyl)-anilin,
3-Methyl-N,N-di-(β-cyanäthyl)-anilin,
3-Chlor-N,N-dimethylanilin,
3-Methyl-N-äthyl-N-benzylanilin,
N,N-Di-n-propylanilin,
3-Acetylamino-N,N-di-(β-hydroxyäthyl)-anilin,
3-Methyl-N,N-di-(β-acetoxyäthyl)-anilin,
N-Äthyl-N-(β-chloräthyl)-anilin,
2-Methoxy-5-acetylamino-N-benzylanilin,
2-Methoxy-5-acetylamino-N-(β-acetoxyäthyl)-N-benzylanilin,
3-Methyl-N-äthyl-N-(β-cyanäthyl)-anilin,
2-Methyl-5-acetylamino-N,N-dimethylanilin,
2-Chlor-5-acetylamino-N,N-dimethylanilin,
2-Chlor-5-acetylamino-N-(γ-phenoxy-β-hydroxy-n-propyl)-anilin,
3-Ureidoanilin,
N-Äthyl-N-(3'-sulfobenzyl)-anilin,
3-Methyl-N-äthyl-N-(β-sulfoäthyl)-anilin,
3-Benzoylamino-N,N-diäthylanilin,
3-(p-Tolylsulfamoyl)-N,N-diäthylanilin,
3-(p-Chlorbenzoylamino)-N,N-diäthylanilin,
3-Methoxy-N,N-diäthylanilin,
3-Methyl-N,N-di-(β-hydroxyäthyl)-anilin,
3-Methyl-6-methoxy-N,N-di-(β-hydroxyäthyl)-anilin,
3-Acetylaminoanilin,
N,N-Di-(β-cyanäthyl)-anilin,
3-Acetylamino-N,N-di-(β-cyanäthyl)-anilin,
3-Methyl-N-äthyl-N-(β-hydroxyäthyl)-anilin,
3-Methyl-N-äthyl-N-(β-cyanäthyl)-anilin,
N-(β-cyanäthyl)-anilin, N-Methyl-N-benzylanilin,
Phenol, 3-Methylphenol, Methoxybenzol,
3-Äthoxytoluol,
1-Hydroxy-4-methoxybenzol, 1-Hydroxy-4-tert.-butylbenzol,
1-[3'-Chlorphenyl)-3-methylpyrazolon-5,
1-(2'-Chlor-6'-methylphenyl)-3-methyl-pyrazolon-5,
1-Phenyl-3-methylpyrazolon-5,
1-(2'-, 3'- oder 4'-sulfophenyl)-3-methyl-pyrazolon-5,
1-(2'-Chlor-4'- oder 5'-Sulfophenyl)-3-methylpyrazolon-5,
1-(2'-Methyl-4'-sulfophenyl)-3-methyl-pyrazolon-5,
1-[4',8'-Disulfonaphthyl-(2)]-3-methyl-pyrazolon-5,
1-[5',7'-Disulfonaphthyl-(2)]-3-methyl-pyrazolon-5,
1-(2'-Chlor-5'-sulfophenyl)-3-methyl-5-aminopyrazol,
1-(2'-Chlor-4'-sulfophenyl)-3-methyl-5-aminopyrazol,
1-(3'- oder 4'-Sulfophenyl)-3-methyl-5-aminopyrazol,
2-Methylindol, 2-Phenylindol,
1-Methyl-2-phenylindol, 1-Octyl-2-methylindol,
2,4,6-Triaminopyrimidin, Acetessigsäureanilid.

Die Verbindungen der Formel (9), in denen X die –CO-Gruppe und R einen faserreaktiven Alkylrest, wie z.B. den 1,2-Dibromäthyl- oder Chlormethylrest, bedeutet, sind beispielsweise aus der DE-OS 25 07 863 bekannt und werden nach bekannten Methoden hergestellt. Die Verbindungen der Formel

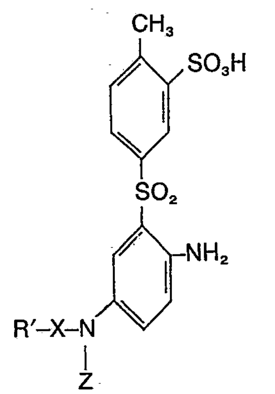

(11)

worin R' ein gegebenenfalls substituierter $C_{1-12}$-Alkyl-, Cycloalkyl-, Aralkyl- oder Arylrest, X eine –CO– oder $-SO_2$-Gruppe, eine

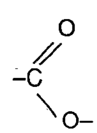

Gruppe,

wobei R' an das Sauerstoffatom gebunden ist, oder eine $-SO_2NH-$ oder

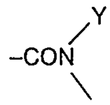 -Gruppe,

wobei R′ an das Stickstoffatom gebunden ist, Y Wasserstoff oder $C_{1-4}$-Alkyl ist, und Z Wasserstoff oder $C_{1-4}$-Alkyl ist, wobei falls X die –CO-Gruppe ist R′ als $C_{1-12}$-Alkyl nicht durch Halogen substituiert sein darf, werden hergestellt, indem man eine Verbindung der Formel

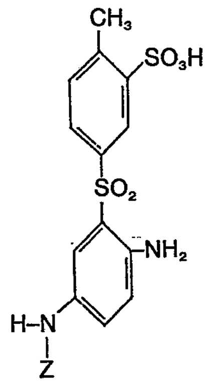 (12)

mit einer Verbindung, die die Gruppe R′–X einführt, in wässriger Lösung bei schwach sauren, neutralen bis schwach alkalischen pH-Werten, bei Temperaturen zwischen 0° und 100 °C oder gegebenenfalls in organischen Lösungsmitteln in Gegenwart von wasserabspaltenden Mitteln bei Temperaturen zwischen 100° und 150 °C zu einer Verbindung der Formel (11) umsetzt.

Als die Gruppe R′–X einführende Verbindungen kommen z.B. solche in Betracht, die ein an X der Gruppe R′–X gebundenes abspaltbares Halogenatom, wie ein Fluor-, Chlor- oder Bromatom oder eine Hydroxygruppe enthalten; die die Gruppe R′–X durch Spaltung eines Anhydrids einführen; oder die unter Addition und gegebenenfalls nachfolgender Umlagerung, beispielsweise der Addition mit Diketen oder einem Isocyanat, mit einer Verbindung der Formel (12) zu einer Verbindung der Formel (11) umgesetzt werden.

Als wasserabspaltende Mittel kommen beispielsweise in Betracht: Carbodiimid, Triphenylsulfit.

Als Ausgangsverbindungen, die die Gruppe R′–X einführen, seien beispielsweise genannt:
Acetanhydrid, Propionsäureanhydrid,
Phthalsäureanhydrid, Phenylisocyanat,
3-Chlorphenylisocyanat, Methylisocyanat,
Äthylisocyanat, Isopropylisocyanat,
tert.-Butylisocyanat, Cyclohexylisocyanat,
4-Methylphenylisocyanat,
Chlorameisensäure-methyl-, -äthyl-, -propyl-, -isopropyl-, -n-butyl-, -isobutyl-, -sek.-butyl-, -tert.-butyl-, β-hydroxyäthyl-, -β-methoxyäthyl-, -phenyl- oder -benzylester,
Chlorameisensäure-N-methyl-, -äthyl-, -isopropyl-, -tert.-butyl- oder -cyclohexylamid,
Chlorameisensäure-N,N-dimethyl- oder -diäthylamid,
Methansulfochlorid, Äthansulfochlorid,
Äthylaminosulfochlorid,
Phenyl-, p-Tolyl- oder 4-Acetylaminophenylsulfochlorid,
Acetylchlorid, Propionylchlorid,
Acetacetylchlorid, Butyryl-,
Isobutyryl-, Valeryl-, Isovaleryl- oder Pivaloylchlorid,
2-Äthyl-butyrylchlorid,
2-Äthylhexancarbonsäurechlorid,
4-Methyl- oder 4-Chlorbenzoylchlorid,
2-Phenylacetylchlorid, Diketen,
2-Hydroxybenzoesäure, Phthalsäure.

Die bevorzugten Verfahren zur Herstellung der Verbindung der Formel (11) sind dadurch gekennzeichnet, dass man

a) eine Verbindung der Formel (12) mit einer Verbindung der Formel

$$R'\text{–}X\text{–}A \qquad (13)$$

umsetzt, wobei A Halogen, wie Fluor, Chlor oder Brom bedeutet und R′ und X die unter Formel (11) angegebenen Bedeutungen haben;

b) zur Herstellung von Verbindungen der Formel

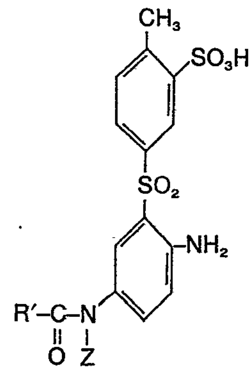 (14),

worin R′ und Z die unter Formel (11) angegebenen Bedeutungen haben, eine Verbindung der Formel (12) mit einem Anhydrid umsetzt, das den Rest der Formel

$$R'\text{–CO–} \qquad (15)$$

einführt; oder

c) zur Herstellung von Verbindungen der Formel

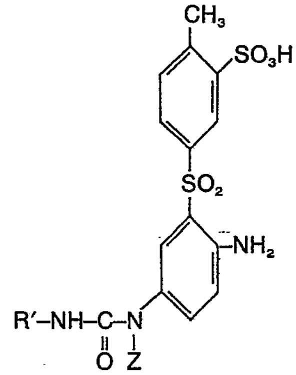 (16),

worin R′ und Z die unter Formel (11) angegebenen Bedeutungen haben, eine Verbindung der Formel (12) mit einem Isocyanat der Formel

$$R'-N=C=O \quad (17)$$

umsetzt; oder

d) eine Verbindung der Formel (12) mit Diketen umsetzt; oder

e) eine Verbindung der Formel (12) mit einer Verbindung der Formel

$$R'-COOH \quad (18)$$

in organischen Lösungsmitteln und in Gegenwart von wasserabspaltenden Mitteln umsetzt, wobei R′ in Formel (18) die unter Formel (11) angegebene Bedeutung hat.

Bevorzugt sind Verbindungen der Formel (11), worin R′$C_{1-7}$-Alkyl, das durch Hydroxy, Methoxy oder Acetyl substituiert sein kann, Cyclohexyl, Benzyl oder Phenyl, das durch Methyl, Hydroxy, Chlor, Carboxy oder Acetylamino substituiert sein kann, X eine –CO– oder $-SO_2$-Gruppe, eine –COO-Gruppe, wobei R an das Sauerstoffatom gebunden ist, oder eine –CONH–,

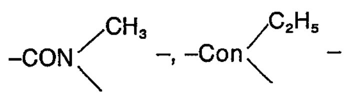

oder $-SO_2NH$-Gruppe, wobei R′ an das Stickstoffatom gebunden ist, und Z Wasserstoff ist. Sie werden hergestellt, indem man die Verbindung der Formel (12), worin Z Wasserstoff ist, mit Verbindungen der Formeln (13) oder (17), einem Diketen oder einem Anhydrid, das den Rest der Formel (15) einführt, umsetzt, wobei R′ und X in den Formeln (13), (15) und (17) die oben angegebenen bevorzugten Bedeutungen haben.

Als Beispiele für Verbindungen der Formel (9) bzw. (11) seien genannt:

2-Amino-5-acetylamino-1,1′-diphenylsulfon-4′-methyl-3′-sulfonsäure,
2-Amino-5-propionylamino-1,1′-diphenylsulfon-4′-methyl-3′-sulfonsäure,
2-Amino-5-methylsulfamoyl-1,1′-diphenylsulfon-4′-methyl-3′-sulfonsäure,
2-Amino-5-(2′-oxybutyrylamino)-1,1″-diphenylsulfon-4″-methyl-3″-sulfonsäure,
2-Amino-5-(1′-chlorpropionylamino)-1,1″-diphenylsulfon-4″-methyl-3″-sulfonsäure,
2-Amino-5-butyrylamino-1,1′-diphenylsulfon-4′-methyl-3′-sulfonsäure,
2-Amino-5-isopropionylamino-1,1′-diphenylsulfon-4′-methyl-3′-sulfonsäure,
2-Amino-5-valerylamino-1,1′-diphenylsulfon-4′-methyl-3′-sulfonsäure,
2-Amino-5-isovalerylamino-1,1′-diphenylsulfon-4′-methyl-3′-sulfonsäure,
2-Amino-5-pivaloylamino-1,1′-diphenylsulfon-4′-methyl-3′-sulfonsäure,
2-Amino-5-(3′-äthylbutyrylamino)-1,1″-diphenylsulfon-4″-methyl-3″-sulfonsäure,
2-Amino-5-(5′-äthylhexanoylamino)-1,1″-diphenylsulfon-4″-methyl-3″-sulfonsäure,
2-Amino-5-methylaminocarbonylamino-1,1′-diphenylsulfon-4′-methyl-3′-sulfonsäure,
2-Amino-5-äthylaminocarbonylamino-1,1′-diphenylsulfon-4′-methyl-3′-sulfonsäure,
2-Amino-5-isopropylaminocarbonylamino-1,1′-diphenylsulfon-4′-methyl-3′-sulfonsäure,
2-Amino-5-tert.-butylaminocarbonylamino-1,1′-diphenylsulfon-4′-methyl-3′-sulfonsäure,
2-Amino-5-cyclohexylaminocarbonylamino-1,1′-diphenylsulfon-4′-methyl-3′-sulfonsäure,
2-Amino-5-N,N-dimethylaminocarbonylamino-1,1′-diphenylsulfon-4′-methyl-3′-sulfonsäure,
2-Amino-5-N,N-diäthylaminocarbonylamino-1,1′-diphenylsulfon-4′-methyl-3′-sulfonsäure,
2-Amino-5-methoxycarbonylamino-1,1′-diphenylsulfon-4′-methyl-3′-sulfonsäure,
2-Amino-5-äthoxycarbonylamino-1,1′-diphenylsulfon-4′-methyl-3′-sulfonsäure,
2-Amino-5-(β-hydroxyäthoxycarbonylamino)-1,1′-diphenylsulfon-4′-methyl-3′-sulfonsäure,
2-Amino-5-propoxycarbonylamino-1,1′-diphenylsulfon-4′-methyl-3′-sulfonsäure,
2-Amino-5-isopropoxycarbonylamino-1,1′-diphenylsulfon-4′-methyl-3′-sulfonsäure,
2-Amino-5-(n-butoxy-, isobutoxy-, sek.-butoxy oder tert.-butoxy-carbonylamino)-1,1′-diphenylsulfon-4′-methyl-3′-sulfonsäure,
2-Amino-5-methoxyäthoxycarbonylamino-1,1′-diphenylsulfon-4′-methyl-3′-sulfonsäure,
2-Amino-5-äthylaminosulfonylamino-1,1′-diphenylsulfon-4′-methyl-3′-sulfonsäure,
2-Amino-5-(4′-acetylamino- oder 4′-methylphenylsulfamoyl)-1,1″-diphenylsulfon-4″-methyl-3″-sulfonsäure,
2-Amino-5-phenylsulfamoyl-1,1′-diphenylsulfon-4′-methyl-3′-sulfonsäure,
2-Amino-5-benzyloxycarbonylamino-1,1′-diphenylsulfon-4′-methyl-3′-sulfonsäure,
2-Amino-5-phenoxycarbonylamino-1,1′-diphennylsulfon-4′-methyl-3′-sulfonsäure,
2-Amino-5-phenylaminocarbonylamino-1,1′-diphenylsulfon-4′-methyl-3′-sulfonsäure,
2-Amino-5-(4′-methyl- oder 3′-chlorphenylaminocarbonylamino)-1,1″-diphenylsulfon-4″-methyl-3″-sulfonsäure,
2-Amino-5-benzylcarbonylamino-1,1′-diphenylsulfon-4′-methyl-3′-sulfonsäure,
2-Amino-5-benzoylamino-1,1′-diphenylsulfon-4′-methyl-3′-sulfonsäure und
2-Amino-5-(4′-methyl-, 4′-chlor-, 2′-hydroxy- oder 2′-carboxybenzoylamino)-1,1″-diphenylsulfon-4″-methyl-3″-sulfonsäure.

Die Farbstoffe der Formel (1) eignen sich zum Färben und Bedrucken von Amidgruppen enthaltenden Materialien, wie Textilfasern, Textilfäden und -geweben aus Wolle, Seide und Polyurethanfasern, insbesondere aber zum Färben und Bedrucken von synthetischem Polyamid, wobei die üblichen Färbeverfahren angewendet werden.

Sie zeichnen sich aus durch Brillanz und Farbstärke, gutes Auszieh- und Aufbauvermögen, Beständigkeit gegenüber Formaldehyd und allgemein gute Echtheiten, wie Lichtechtheit, Reibechtheit, Säure- und Alkaliechtheit, Nassechtheiten, insbesondere Wasch-, Wasser-, Heisswasser- und Schweissechtheit und geben egale Färbungen.

Aus der CH-A-100 855 ist ein ähnlicher Monoazofarbstoff bekannt, der jedoch nicht alle guten Eigenschaften der erfindungsgemässen Monoazofarbstoffe aufweist. Aus der CH-A-100 857, FR-A-871 731 und FR-A-1 221 165 sind Farbstoffe bekannt, die sich strukturell von den erfindungsgemässen Farbstoffen in der Kupplungskomponente unterscheiden.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1:

34,2 g 2,5-Diamino-1,1′-diphenylsulfon-4′-methyl-3′-sulfonsäure

werden in 150 ml Wasser bei Raumtemperatur unter Zusatz von 10N Natronlauge bei pH 7 gelöst. Es werden 9,24 g Natriumbicarbonat eingestreut und nach dem Abkühlen bei 5–7° 13,0 g Propionsäureanhydrid in einer Stunde zugetropft. Die Ausfällung wird durch Zugabe von Kochsalz vervollständigt, filtriert, mit Sole gewaschen und bei 60–70° im Vacuumschrank getrocknet. Man erhält 39,6 g des Zwischenprodukts der Formel

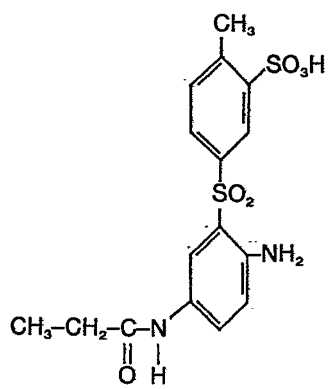

Beispiel 2:

34,2 g 2,5-Diamino-1,1′-diphenylsulfon-4′-methyl-3′-sulfonsäure

werden in 150 ml Wasser bei Raumtemperatur unter Zusatz von 2N Natronlauge bei pH 7 gelöst. Man kühlt ab und lässt bei 3–5° innert 1 Stunde 15,4 g 3-Chlor-phenylisocyanat hinzutropfen. Anschliessend wird mit wenigen Tropfen 2N Natronlauge auf pH 8 gestellt, auf 85° erwärmt und die Lösung mit Aktivkohle klärfiltriert. Das auskristallisierte Produkt wird nach einiger Zeit bei Raumtemperatur filtriert und nach dem Waschen mit Sole bei 60–70° im Vacuum getrocknet. Man erhält 50,96 g des Zwischenproduktes der Formel

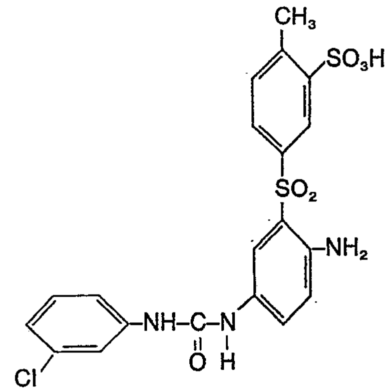

Beispiel 3:

34,2 g 2,5-Diamino-1,1′-diphenylsulfon-4′-methyl-3′-sulfonsäure

werden in 150 ml Wasser bei Raumtemperatur unter Zusatz von 2N Natronlauge bei pH 7 gelöst. Es werden 9,24 g Natriumbicarbonat eingestreut und nach dem Abkühlen bei 2–5° 13,65 g Chlorameisensäureisobutylester in einer Stunde zugetropft. Nach kurzem Nachrühren wird die mit Salzsäure auf pH 5 gestellte, mit Aktivkohle klärfiltrierte Lösung im Vacuum zur Trockne eingedampft. Man erhält 47,84 g des Zwischenproduktes der Formel

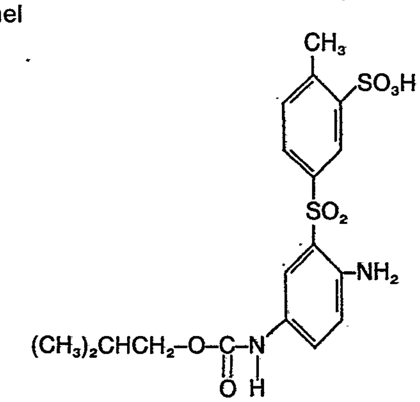

Beispiel 4:

34,2 g 2,5-Diamino-1,1′-diphenylsulfon-4′-methyl-3′-sulfonsäure

werden in 150 ml Wasser bei Raumtemperatur unter Zusatz von 2N Natronlauge bei pH 7 gelöst. Nach Zugabe von 11,76 g Natriumbicarbonat werden in ca. 2 Stunden 13,74 g Methansulfochlorid zugetropft. Die neutrale Masse wird mit Kochsalz ausgesalzen und filtriert. Man erhält nach dem Waschen mit Sole und Trocknen bei 60–75° im Vacuum 42,42 g des Zwischenproduktes der Formel

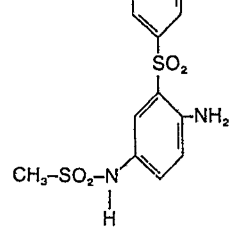

Beispiel 5:

Acetoacetylierung

34,2 g 2,5-Diamino-1,1'-diphenylsulfon-4'-methyl-3'-sulfonsäure

werden in 150 ml Wasser bei Raumtemperatur unter Zusatz von 10N Natronlauge bei pH 7 gelöst. Nach Abkühlen auf 5° lässt man 9,24 g Diketen bei 2–5° in 1½ Stunden zutropfen. Die trübe Lösung wird mit Aktivkohle klärfiltriert und anschliessend im Vacuum zur Trockne eingedampft. Man erhält 45,2 g leicht hygroskopisches Pulver.

Diazotierung

8,52 g der Acetoacetylkomponente werden in 30 ml Wasser bei Raumtemperatur gelöst und auf pH 7–8 gestellt. Man gibt 5 ml 4N Natriumnitrit hinzu und lässt die Lösung in eine Mischung von 40 g Eis und 5 ml 10N Salzsäure eintropfen. Nach 10 Minuten wird ein noch schwach vorhandener Nitritüberschuss mit Sulfaminsäure zerstört.

Kupplung

3,26 g N,N-Diäthyl-m-toluidin werden in 25 ml Wasser mit 3 ml 10N Salzsäure in Lösung gebracht und der Suspension des Diazoniumsalzes zugefügt. Man stellt mit 2N Natronlauge auf pH 3 ein und lässt während 3 Stunden bei diesem pH-Wert verweilen. Anschliessend wird auf pH 9,5 erhöht und filtriert. Nach dem Waschen mit etwas Sole wird im Vacuum bei 65–70° getrocknet. Man erhält 11,91 g des Monoazofarbstoffes der Formel

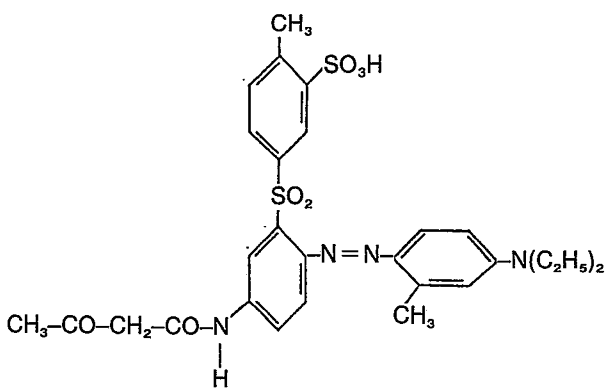

Der so erhaltene Farbstoff färbt Polyamid in gelbstichig roten Tönen.

Beispiel 6:

Benzoylierung

36,59 g 2,5-Diamino-1,1'-diphenylsulfon-4'-methyl-3'-sulfonsäure

werden in 210 ml Wasser mit 10N Natronlauge bei pH 7,5 und 45–50° gelöst. Man gibt 11,67 g Natriumbicarbonat hinzu und kühlt auf 20° ab. Innerhalb von 1½ Stunden werden bei 20–27° 16,02 g Benzoylchlorid zugetropft und während einer ½ Stunde nachgerührt.

Diazotierung

Die oben hergestellte Suspension wird mit Wasser auf ein Volumen von 400 ml gestellt und bei 40° in Lösung gebracht. Man fügt 26,75 ml 10N Salzsäure hinzu und diazotiert mit 26,75 ml 4N Natriumnitrit bei 40–44°. Nach einer Nachrührdauer von ¼ Stunde wird ein eventuell noch vorhandener Nitritüberschuss mit Sulfaminsäure zerstört.

Kupplung

16,3 g N,N-Diäthyl-m-toluidin werden bei 45–41° in 20 Minuten der Suspension des Diazoniumsalzes zugetropft. Mit 10N Natronlauge steigert man den pH-Wert von 3 allmählich auf 11 und erwärmt gegen Ende der Kupplung auf 50–55°. Nachdem mit 10N Salzsäure anschliessend auf pH 1,5 gestellt wurde, erhöht man die Temperatur auf 65° und filtriert. Nach dem Waschen mit Wasser wird bei 100–110° getrocknet. Man erhält 59,5 g des Monoazofarbstoffes der Formel

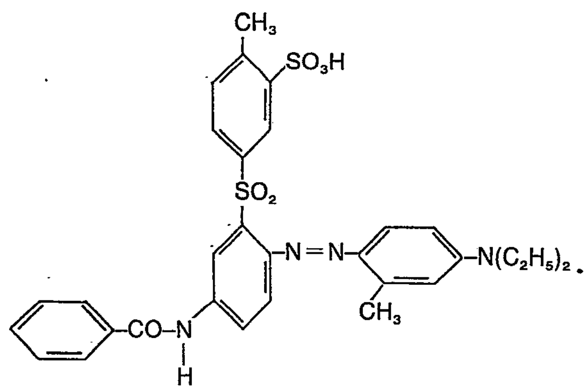

Der so erhaltene Farbstoff färbt Polyamid in gelbstichig roten Tönen.

Beispiel 7:

Diazotierung

8,0 g der Verbindung aus Beispiel 1 löst man bei pH 8 in 50 ml Wasser von 20–25°. Man fügt 25 g Eis und 5 ml 4N Natriumnitrit hinzu und versetzt die Mischung dann mit 11 ml einer ca. 31%-igen Lösung von Naphthalin-1-sulfonsäure. Ein geringer Nitritüberschuss wird nach 20 Minuten mit Sulfaminsäure zerstört.

Kupplung

3,26 g N,N-Diäthyl-m-toluidin werden in 25 ml Wasser mit 3 ml 10N Salzsäure in Lösung gebracht und der Suspension des Diazoniumsalzes zugegeben. Mit 2N Natronlauge wird allmählich auf pH 8,5 gestellt und die Kupplung zu Ende geführt. Der abfiltrierte Niederschlag wird mit wenig Wasser gewaschen und im Vacuum bei 60–70° getrocknet. Man erhält 11,1 g des Monoazofarbstoffes der Formel

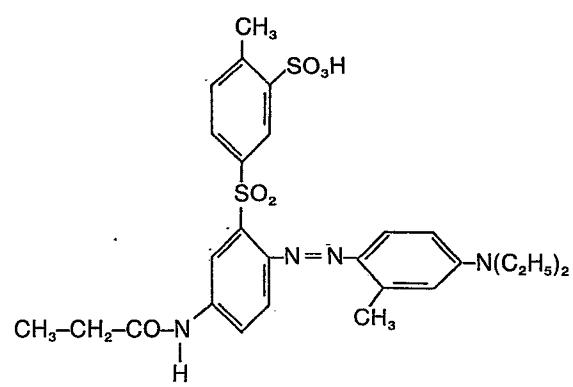

Der so erhaltene Farbstoff färbt Polyamid aus schwach saurem Bad in gelbstichig roten Tönen. Der Farbstoff verfügt über ein hervorragendes Aufbauvermögen, vorzügliche Formaldehydbeständigkeit und gute Nass- sowie Lichtechtheit.

Beispiel 8:

34,2 g 2,5-Diamino-1,1′-diphenylsulfon-4′-methyl-3′-sulfonsäure

und 8,4 g Natriumbicarbonat werden in 75 ml Diäthylenglykoldimethyläther homogen verrührt. Nach Zugabe von 13,9 g Salicylsäure und 68,2 g Triphenylsulfit wird erwärmt und 6 Stunden bei 115–125° nachgerührt. Bei Raumtemperatur werden 300 ml Chloroform zugesetzt und nach Filtration mit der gleichen Menge Lösungsmittel gewaschen. Der Filterrückstand wird unter Rühren in 200 ml Wasser mit Natronlauge 10N auf pH 7 gestellt und wieder abgenutscht. Das mit Eiswasser gewaschene Produkt wird im Vacuum bei 60–70° getrocknet. Man erhält 22,1 g des Zwischenproduktes der Formel

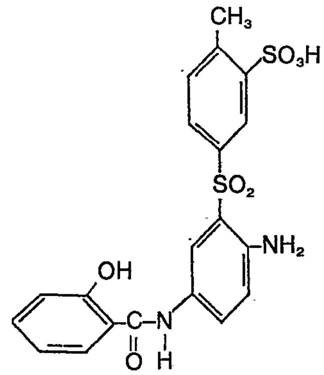

Wenn man wie in den Beispielen 1–8 angegeben verfährt, jedoch als Monoacylderivat der 2,5-Diamino-1,1′-diphenylsulfon-4′-methyl-3′-sulfonsäure und als Kupplungskomponente die in folgender Tabelle aufgeführten Verbindungen einsetzt, so erhält man ebenfalls wasserlösliche Farbstoffe, die Polyamid in der angegebenen Nuance mit ähnlich guten Eigenschaften anfärben.

Diazokomponente generell 2-Amino-5-acylamino-1,1'-diphenylsulfon-4'-methyl-3'-sulfonsäure

| Nr. | Acylrest | Kupplungskomponente | Nuance auf Polyamid |
|---|---|---|---|
| 1 | $-COCH_3$ | 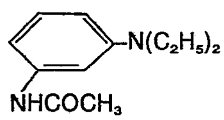 | gelbstichig rot |
| 2 | " | 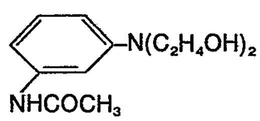 | " |
| 3 | " | 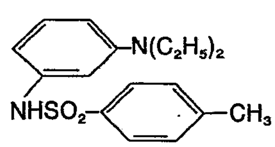 | gelbstichig rot |
| 4 | " | 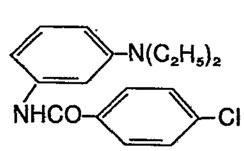 | rot |
| 5 | " | 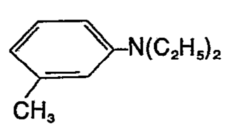 | gelbstichig rot |
| 6 | " | 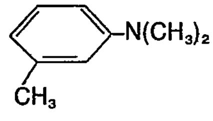 | " |

| Nr. | Acylrest | Kupplungskomponente | Nuance auf Polyamid |
|---|---|---|---|
| 7 | $-COCH_3$ | 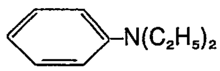 | rotstichig orange |
| 8 | " | 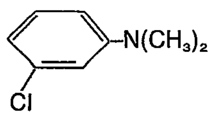 | " |
| 9 | " | 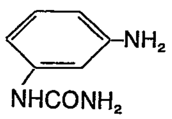 | " |
| 10 | " | 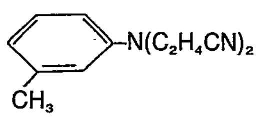 | orange |
| 11 | " | 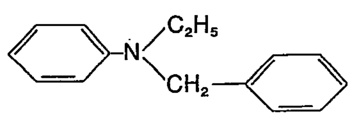 | rotstichig orange |
| 12 | " | 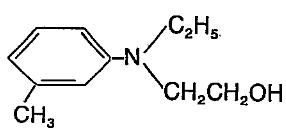 | gelbstichig rot |
| 13 | " | 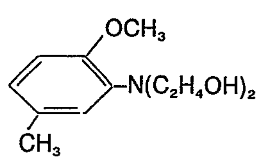 | rot |
| 14 | " | 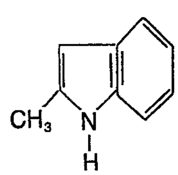 | rotstichig gelb |
| 15 | " | 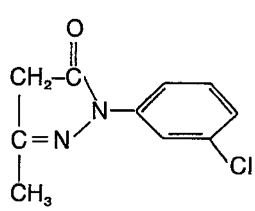 | rotstichig gelb |
| 16 | " | 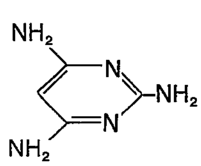 | rotstichig gelb |

| Nr. | Acylrest | Kupplungskomponente | Nuance auf Polyamid |
|---|---|---|---|
| 17 | $-COCH_2CH_3$ | 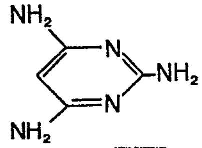 | rotstichig gelb |
| 18 | " | 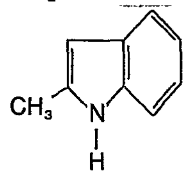 | rotstichig gelb |
| 19 | 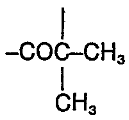 | 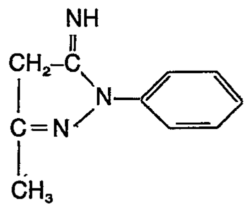 | gelb |
| 20 | $-COCH_2CH_3$ | 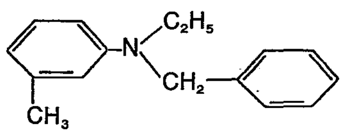 | rotstichig orange |
| 21 | " | 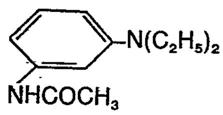 | gelbstichig rot |
| 22 | $-COCH_2CH_2Cl$ | 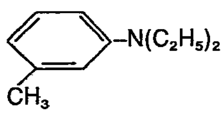 | gelbstichig rot |
| 23 | " | 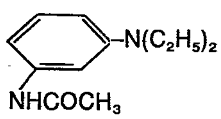 | gelbstichig rot |
| 24 | " | 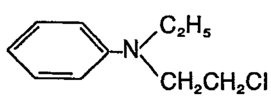 | rotstichig orange |
| 25 | " | 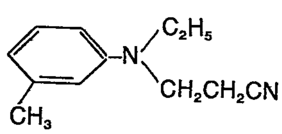 | rotstichig orange |
| 26 | $-COCH_2CH_2Cl$ | 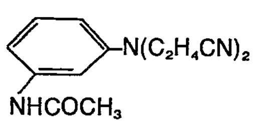 | orange |

| Nr. | Acylrest | Kupplungskomponente | Nuance auf Polyamid |
|---|---|---|---|
| 27 | $-COCH_2CH_2Cl$ | 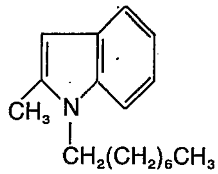 | rotstichig gelb |
| 28 | $-COCH_2COCH_3$ | 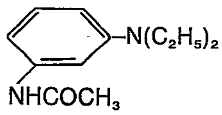 | gelbstichig rot |
| 29 | " | 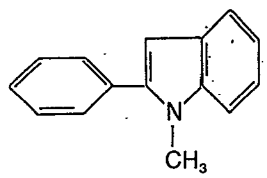 | rotstichig gelb |
| 30 | $-COCH_2CH_2CH_3$ | 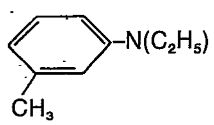 | gelbstichig rot |
| 31 | " | 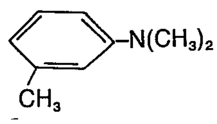 | gelbstichig rot |
| 32 | " | 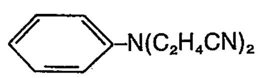 | rotstichig gelb |
| 33 | $-COCH_2CH_2CH_3$ | 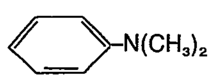 | rotstichig orange |
| 34 | " | 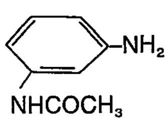 | rotstichig orange |
| 35 | $-COCH(CH_3)_2$ | 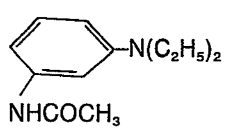 | gelbstichig rot |
| 36 | " | 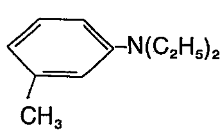 | gelbstichig rot |

| Nr. | Acylrest | Kupplungskomponente | Nuance auf Polyamid |
|---|---|---|---|
| 37 | $-COCH(CH_3)_2$ | 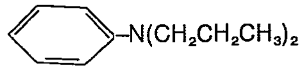 | rotstichig orange |
| 38 | " | 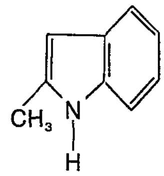 | rotstichig gelb |
| 39 | " | 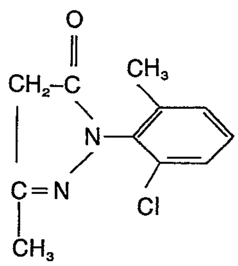 | rotstichig gelb |
| 40 | $-COCH_2CH_2CH_2CH_3$ | 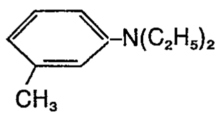 | gelbstichig rot |
| 41 | $-COCH_2CH_2CH_2CH_3$ | 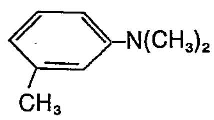 | gelbstichig rot |
| 42 | " | 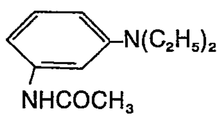 | gelbstichig rot |
| 43 | " | 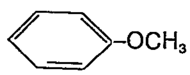 | * gelbstichig orange |
| 44 | " | 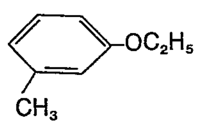 | * gelbstichig orange |
| 45 | $-COCH_2CH(CH_3)_2$ | 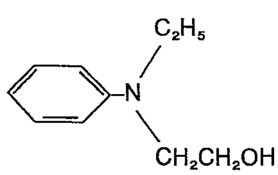 | rotstichig orange |
| 46 | " | 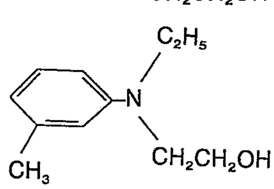 | gelbstichig rot |

*) siehe Hinweis auf Seite 21

| Nr. | Acylrest | Kupplungskomponente | Nuance auf Polyamid |
|---|---|---|---|
| 47 | $-COCH_2CH(CH_3)_2$ | 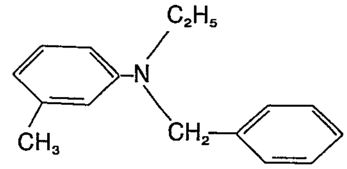 | rotstichig orange |
| 48 | " | 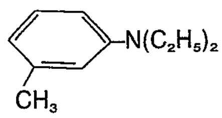 | gelbstichig rot |
| 49 | " | 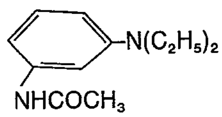 | gelbstichig rot |
| 50 | 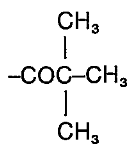 | " | gelbstichig rot |
| 51 | " | 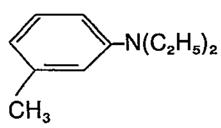 | gelbstichig rot |
| 52 | " | 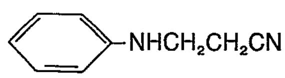 | rotstichig orange |
| 53 | 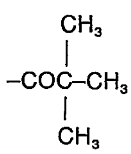 | 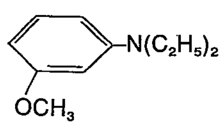 | rotstichig orange |
| 54 | " | 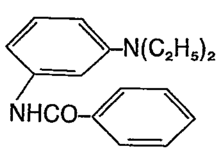 | rot |
| 55 | " | 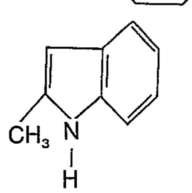 | rotstichig gelb |
| 56 | 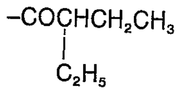 | 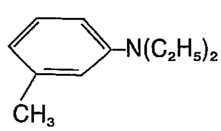 | gelbstichig rot |

| Nr. | Acylrest | Kupplungskomponente | Nuance auf Polyamid |
|---|---|---|---|
| 57 | 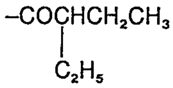 | 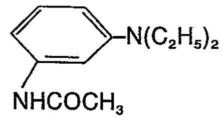 | gelbstichig rot |
| 58 | " | 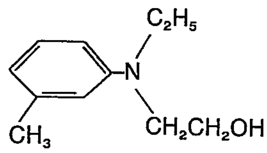 | gelbstichig rot |
| 59 | 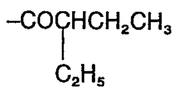 | 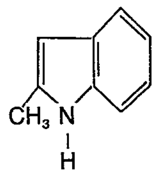 | rotstichig gelb |
| 60 | 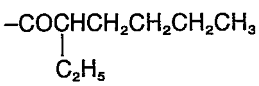 | 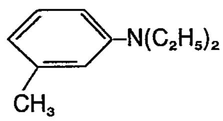 | gelbstichig rot |
| 61 | " | 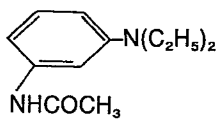 | gelbstichig rot |
| 62 | 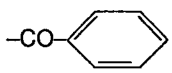 | " | gelbstichig rot |
| 63 | " | 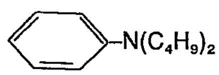 | rotstichig orange |
| 64 | 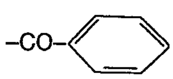 | 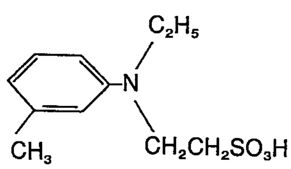 | gelbstichig rot |
| 65 | " | 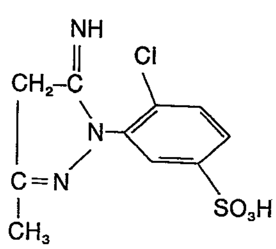 | gelb |

| Nr. | Acylrest | Kupplungskomponente | Nuance auf Polyamid |
|---|---|---|---|
| 66 | 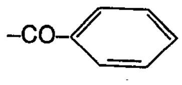 | 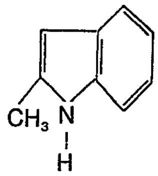 | rotstichig gelb |
| 67 | 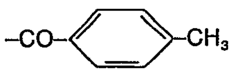 | 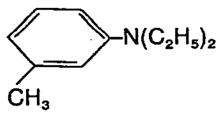 | gelbstichig rot |
| 68 | 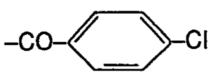 | " | gelbstichig rot |
| 69 | " | 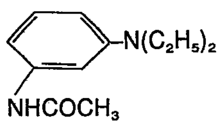 | gelbstichig rot |
| 70 | 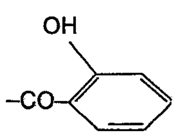 | " | gelbstichig rot |
| 71 | " | 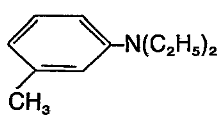 | gelbstichig rot |
| 72 | 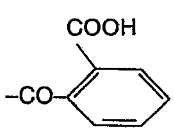 | 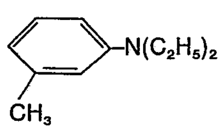 | gelbstichig rot |
| 73 | " | 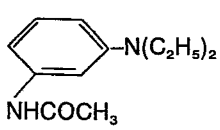 | gelbstichig rot |
| 74 | " | 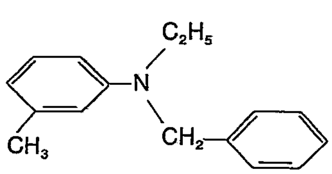 | rotstichig orange |

| Nr. | Acylrest | Kupplungskomponente | Nuance auf Polyamid |
| --- | --- | --- | --- |
| 75 | 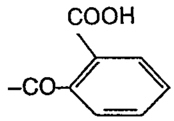 | 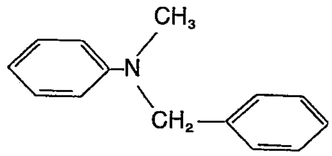 | rotstichig orange |
| 76 | 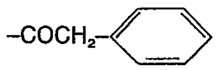 | 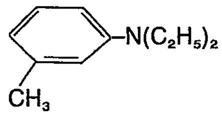 | gelbstichig rot |
| 77 | " | 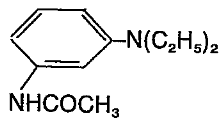 | gelbstichig rot |
| 78 | $-CONHCH_3$ | 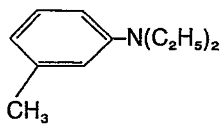 | gelbstichig rot |
| 79 | $-CONHCH_3$ | 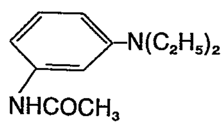 | gelbstichig rot |
| 80 | $-CONHC_2H_5$ | 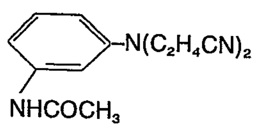 | orange |
| 81 | " | 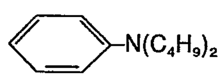 | rotstichig orange |
| 82 | $-CONHCH(CH_3)_2$ | 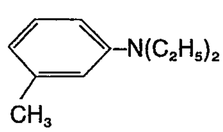 | gelbstichig rot |
| 83 | " | 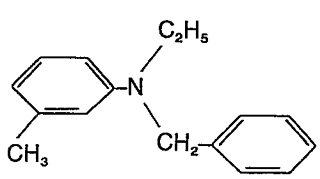 | rotstichig orange |

| Nr. | Acylrest | Kupplungskomponente | Nuance auf Polyamid |
|---|---|---|---|
| 84 | 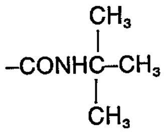 | 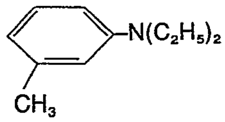 | gelbstichig rot |
| 85 | 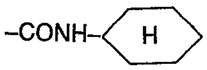 | " | gelbstichig rot |
| 86 | 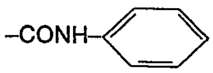 | " | gelbstichig rot |
| 87 | 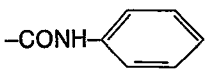 | 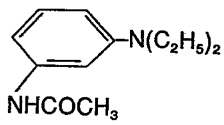 | gelbstichig rot |
| 88 | 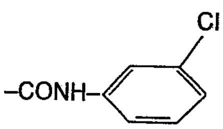 | " | gelbstichig rot |
| 89 | " | 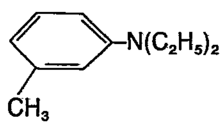 | gelbstichig rot |
| 90 | 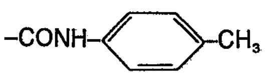 | " | gelbstichig rot |
| 91 | $-CON(CH_3)_2$ | " | gelbstichig rot |
| 92 | $-CON(C_2H_5)_2$ | " | gelbstichig rot |
| 93 | 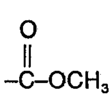 | 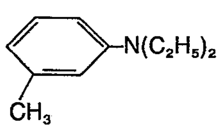 | gelbstichig rot |

| Nr. | Acylrest | Kupplungskomponente | Nuance auf Polyamid |
|---|---|---|---|
| 94 | $-\overset{O}{\overset{\|}{C}}-OC_2H_5$ | 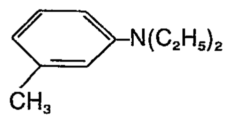 | gelbstichig rot |
| 95 | $-\overset{O}{\overset{\|}{C}}-OCH_2CH_2OH$ | " | gelbstichig rot |
| 96 | $-\overset{O}{\overset{\|}{C}}-OCH_2CH_2CH_3$ | " | gelbstichig rot |
| 97 | $-\overset{O}{\overset{\|}{C}}-OCH(CH_3)_2$ | " | gelbstichig rot |
| 98 | $-\overset{O}{\overset{\|}{C}}-OCH_2CH(CH_3)_2$ | " | gelbstichig rot |
| 99 | $-\overset{O}{\overset{\|}{C}}-O-CH_2CH_2OCH_3$ | " | gelbstichig rot |
| 100 | 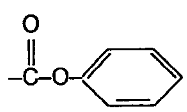 | " | gelbstichig rot |
| 101 | 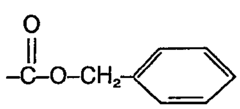 | " | gelbstichig rot |
| 102 | $-SO_2NHC_2H_5$ | " | gelbstichig rot |
| 103 | 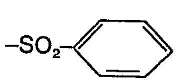 | " | gelbstichig rot |

| Nr. | Acylrest | Kupplungskomponente | Nuance auf Polyamid |
|---|---|---|---|
| 104 | 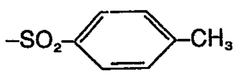 | 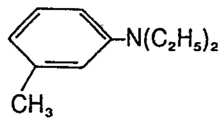 | gelbstichig rot |
| 105 | " | 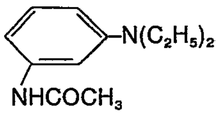 | gelbstichig rot |
| 106 | 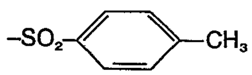 | 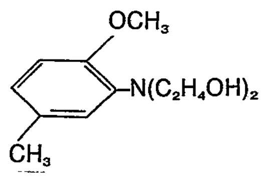 | rot |
| 107 | " | 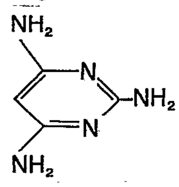 | rotstichig gelb |
| 108 | " | 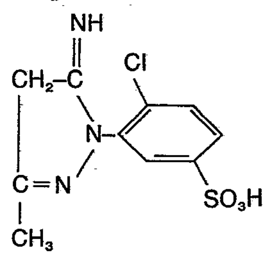 | gelb |
| 109 | 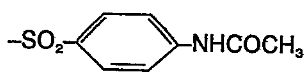 | 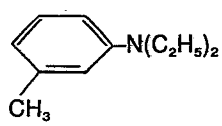 | gelbstichig rot |
| 110 | 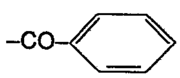 | 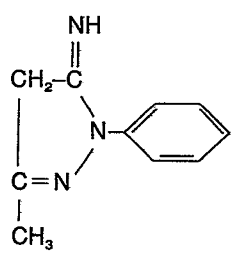 | gelb |
| 111 | $-COCH_2CH_2Cl$ | " | gelb |

* In diesen Fällen (Beispiele 43 und 44) wurde nicht mit den dort angegebenen Kupplungskomponenten, sondern mit den entsprechenden unverätherten Hydroxybenzolen, d.h. mit Phenol bzw. m-Kresol, gekuppelt, und nach der Kupplung wurden die Hydroxygruppen alkyliert. Dass in den Beispielen 43 und 44 die bereits verätherten Hydroxybenzole als Kupplungskomponenten genannt sind, dient lediglich dazu, die Struktur der Endprodukte klarzustellen.

Färbevorschrift

Man färbt 10 Teile Helancatrikot in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 7 beträgt 0,9%, bezogen auf das Fasergewicht. Die Färbedauer bei einer Temperatur von 98° beträgt 30–90 Minuten. Das gefärbte Helancastück wird anschliessend herausgenommen und wie üblich gewaschen und getrocknet.

Man erhält ein tief gelbstichig rot gefärbtes Helancastück, das eine reine Nuance und gute Gesamtechtheiten aufweist und insbesondere gut formaldehydbeständig ist.

**Patentansprüche**

1. Monoazofarbstoffe der Formel

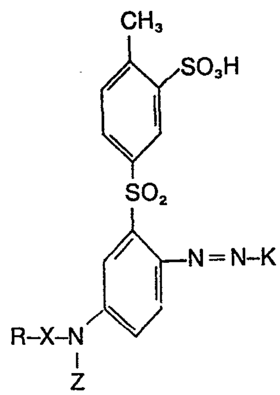

(1),

worin K der Rest einer Kupplungskomponente der Aminobenzol-, Alkoxybenzol-, Hydroxybenzol-, Pyrazolon-, Aminopyrazol-, Pyrimidin-, Indol- oder Acetessigsäureamidreihe, R ein gegebenenfalls substituierter $C_{1-12}$-Alkyl-, Cycloalkyl-, Aralkyl- oder Arylrest, X eine –CO– oder $-SO_2$-Gruppe, eine

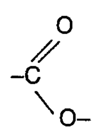 Gruppe,

wobei R an das Sauerstoffatom gebunden ist, oder eine $-SO_2NH-$ oder

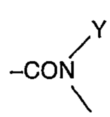 -Gruppe, .

wobei R an das Stickstoffatom gebunden ist, Y Wasserstoff oder $C_{1-4}$-Alkyl ist und Z Wasserstoff oder $C_{1-4}$-Alkyl ist.

2. Monoazofarbstoffe gemäss Anspruch 1, worin K ein Amino-, N–$C_{1-4}$-alkylamino- oder N,N-di-$C_{1-4}$-alkylamino-benzolrest, der im Benzolring durch Methyl, Methoxy, Chlor, Acetylamino, Ureido, Benzoylamino, Chlorbenzoylamino und Methylphenylsulfonylamino substituiert sein kann, und worin die N-Alkylreste unabhängig voneinander durch Hydroxy, Chlor, Cyano, Sulfo oder Phenyl substituiert sein können, ein $C_{1-2}$-Alkoxybenzolrest, der durch Methyl substituiert sein kann, ein 2-Methylindol-, 2-Phenylindol-, N-Octyl-2-methylindol- oder N-Methyl-2-phenylindolrest, ein 1-Phenyl-3-methylpyrazolonrest, der im Phenylrest durch Chlor und Methyl substituiert sein kann, ein 1-Phenyl-3-methyl-aminopyrazolrest, der im Phenylrest durch Chlor und Sulfo substituiert sein kann, oder ein 2,4,6-Triaminopyrimidinrest ist, und worin R $C_{1-7}$-Alkyl, das durch Chlor, Hydroxy, Methoxy oder Acetyl substituiert sein kann, Cyclohexyl, Benzyl oder Phenyl, das durch Methyl, Hydroxy, Chlor, Carboxy oder Acetylamino substituiert sein kann, X eine –CO– oder $-SO_2$-Gruppe, eine

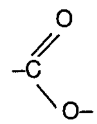 Gruppe,

wobei R an das Sauerstoffatom gebunden ist, oder eine $-SO_2NH-$ oder

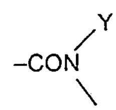 -Gruppe,

wobei R an das Stickstoffatom gebunden ist, Y Wasserstoff, Methyl oder Äthyl ist, und Z Wasserstoff ist.

3. Monoazofarbstoffe gemäss Anspruch 2, worin K ein 4-N,N-Diäthylamino-2-methylphenyl-(1)-rest, R Äthyl, β-Chloräthyl, tert.-Butyl, Phenyl oder 4-Methylphenyl und X die –CO– oder $-SO_2$-Gruppe ist und Z die in Anspruch 2 angegebene Bedeutung hat.

4. Der Monoazofarbstoff gemäss Anspruch 3 der Formel

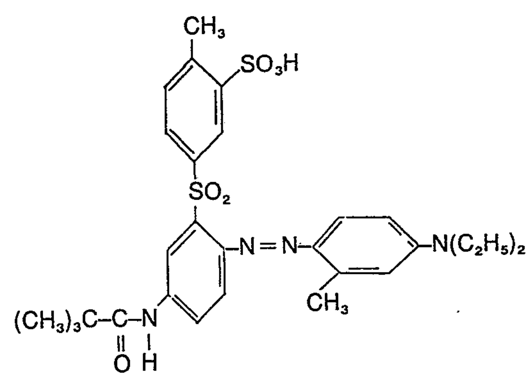

(2),

5. Der Monoazofarbstoff gemäss Anspruch 3 der Formel

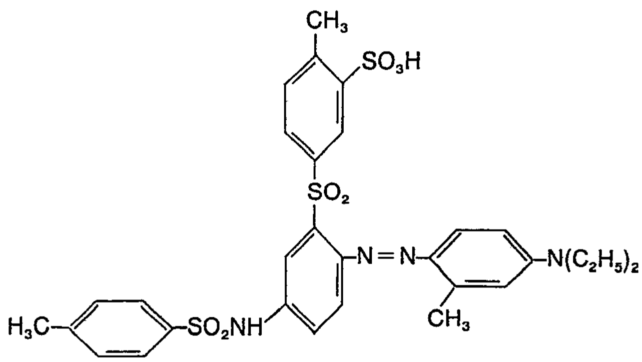

(3),

6. Der Monoazofarbstoff gemäss Anspruch 3 der Formel

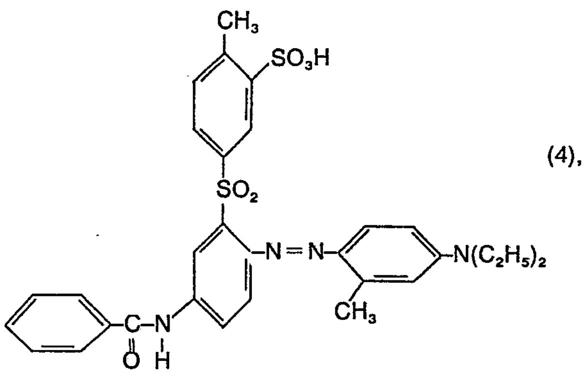

(4),

7. Der Monoazofarbstoff gemäss Anspruch 3 der Formel

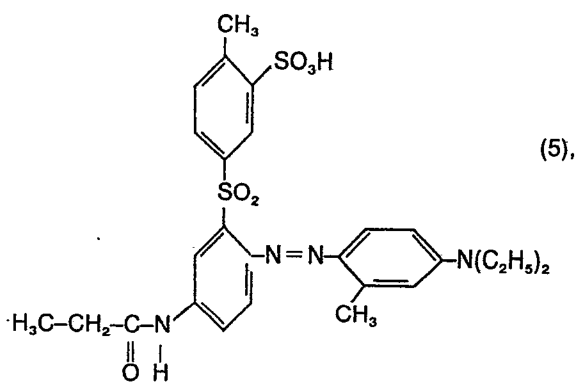

(5),

8. Der Monoazofarbstoff gemäss Anspruch 2 der Formel

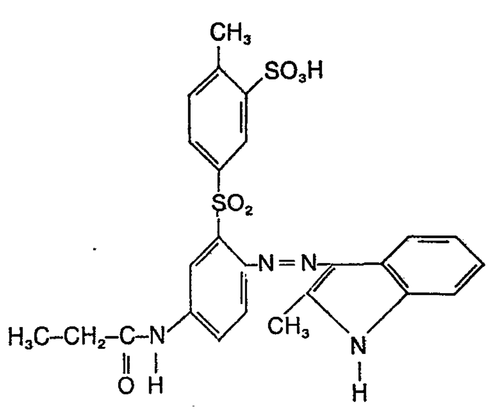

(6),

9. Der Monoazofarbstoff gemäss Anspruch 3 der Formel

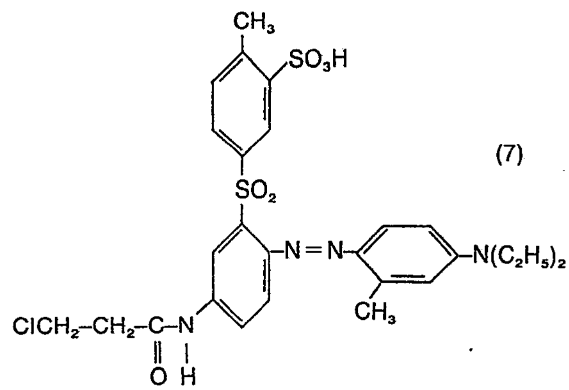

(7)

10. Der Monoazofarbstoff gemäss Anspruch 3 der Formel

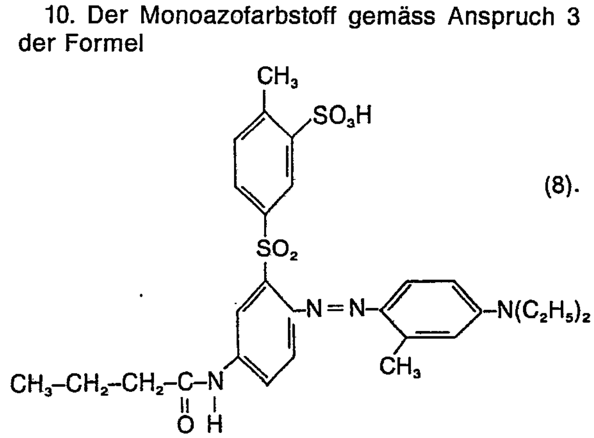

(8).

11. Verfahren zur Herstellung von Monoazofarbstoffen der Formel

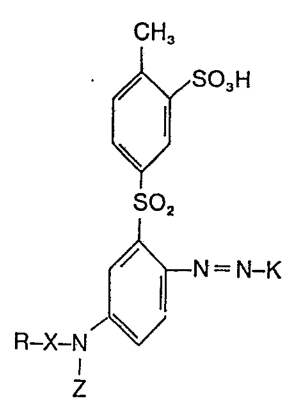

(1),

worin K der Rest einer Kupplungskomponente der Aminobenzol-, Alkoxybenzol-, Hydroxybenzol-, Pyrazolon-, Aminopyrazol-, Pyrimidin-, Indol- oder Acetessigsäureamidreihe, R ein gegebenenfalls substituierter $C_{1-12}$-Alkyl-, Cycloalkyl-, Aralkyl- oder Arylrest, X eine –CO– oder –$SO_2$-Gruppe,

eine 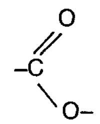 Gruppe,

wobei R an das Sauerstoffatom gebunden ist, oder eine –$SO_2NH$– oder

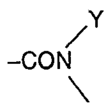 -Gruppe, .

wobei R an das Stickstoffatom gebunden ist, Y Wasserstoff oder $C_{1-4}$-Alkyl ist und Z Wasserstoff oder $C_{1-4}$-Alkyl ist, dadurch gekennzeichnet, dass man eine Diazokomponente der Formel

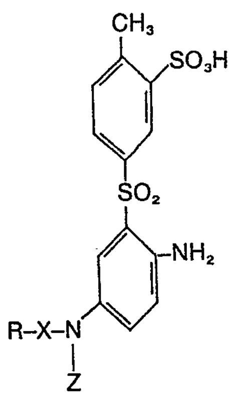

(9)

diazotiert und auf eine Kupplungskomponente der Formel

H–K (10)

kuppelt, wobei K, R, X und Z in den Formeln (9) und (10) die unter Formel (1) angegebenen Bedeutungen haben.

12. Verwendung der Azofarbstoffe gemäss den Ansprüchen 1 bis 10 bzw. der gemäss Anspruch 11 erhaltenen Azofarbstoffe zum Färben und Bedrucken.

13. Verfahren zum Färben und Bedrucken unter Verwendung der Azofarbstoffe gemäss Anspruch 1.

14. Verfahren gemäss Anspruch 13 zum Färben von Polyamidfasern.

15. Färbe- und Druckpräparate, die Azofarbstoffe gemäss den Ansprüchen 1 bis 10 enthalten.

**Claims**

1. A monoazo dye of the formula

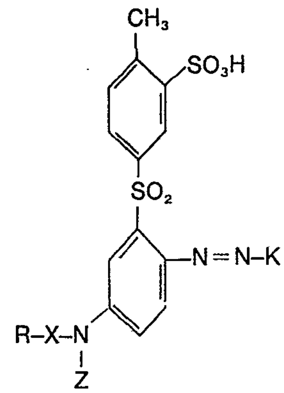

(1),

in which K is the radical of a coupling component of the aminobenzene, alkoxybenzene, hydroxybenzene, pyrazolone, aminopyrazole, pyrimidine, indole or acetoacetamide series, R is a substituted or unsubstituted $C_{1-12}$ alkyl, cycloalkyl, aralkyl or aryl radical, X is a –CO– or –$SO_2$-group, a

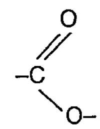 group,

R being attached to the oxygen atom, or an –$SO_2NH$– or

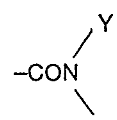 group,

R being attached to the nitrogen atom and Y being hydrogen or $C_{1-4}$ alkyl, and Z is hydrogen or $C_{1-4}$ alkyl.

2. A monoazo dye according to claim 1, in which K is an aminobenzene, N–$C_{1-4}$ alkylaminobenzene or N,N-di-$C_{1-4}$ alkylaminobenzene radical which may be substituted in the benzene ring by methyl, methoxy, chlorine, acetylamino, ureido, benzoylamino, chlorobenzoylamino and methylphenylsulfonylamino, and in which the N-alkyl moieties independently of one another may be substituted by hydroxy, chlorine, cyano, sulfo or phenyl, or K is a $C_{1-2}$ alkoxybenzene radical which may be substituted by methyl, or is a 2-methylindole, 2-phenylindole, N-octyl-2-methylindole or N-methyl-2-phenylindole radical, a 1-phenyl-3-methylpyrazolone radical which may be substituted in the phenyl moiety by chlorine and methyl, or a 1-phenyl-3-methylaminopyrazole radical which may be substituted in the phenyl moiety by chlorine and sulfo, or is a 2,4,6-triaminopyrimidine radical, and in which R is $C_{1-7}$ alkyl which may be substituted by chlorine, hydroxy, methoxy or acetyl, or is cyclohexyl, benzyl or phenyl which may be substituted by methyl, hydroxy, chlorine, carboxy or acetylamino,

X is a –CO– or $-SO_2-$ group, a

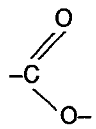

group,

R being attached to the oxygen atom, or an $-SO_2NH-$ or

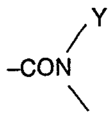

group,

R being attached to the nitrogen atom and Y being hydrogen, methyl or ethyl, and Z is hydrogen.

3. A monoazo dye according to claim 2, in which K is a 4-N,N-diethylamino-2-methyl-1-phenyl radical, R is ethyl, β-chloroethyl, tert-butyl, phenyl or 4-methylphenyl and X is the –CO– or $-SO_2-$ group and Z is as defined in claim 2.

4. The monoazo dye according to claim 3 of the formula

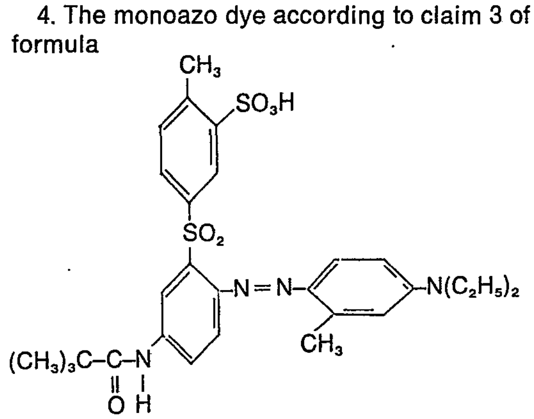

(2).

5. The monoazo dye according to claim 3 of the formula

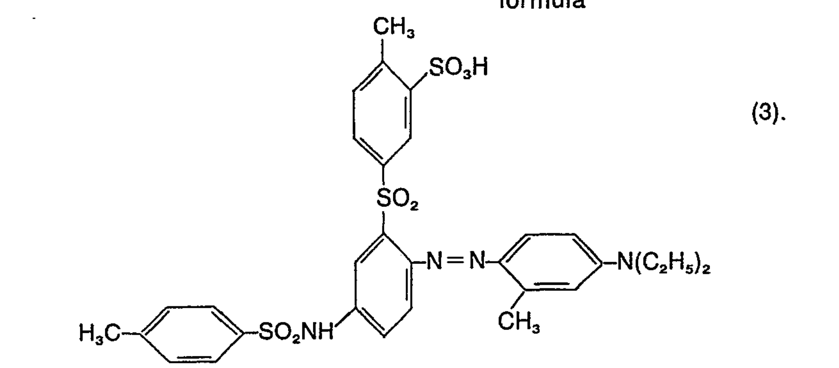

(3).

6. The monoazo dye according to claim 3 of the formula

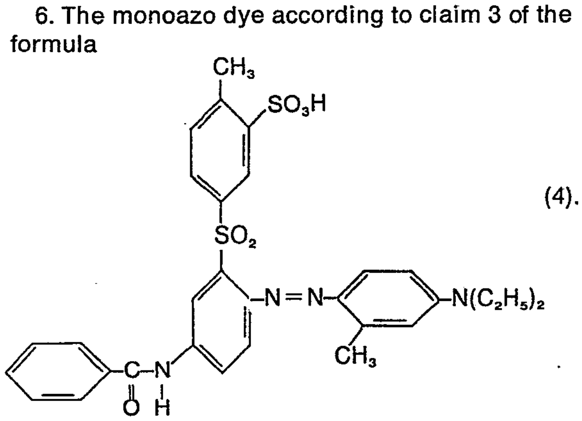

(4).

7. The monoazo dye according to claim 3 of the formula

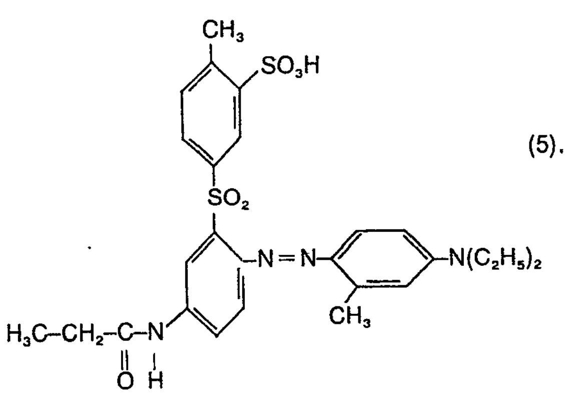

(5).

8. The monoazo dye according to claim 2 of the formula

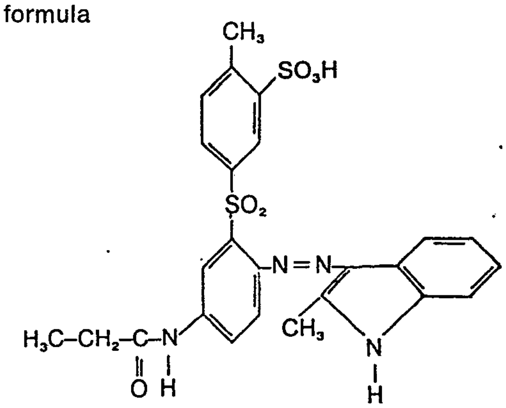

(6).

9. The monoazo dye according to claim 3 of the formula

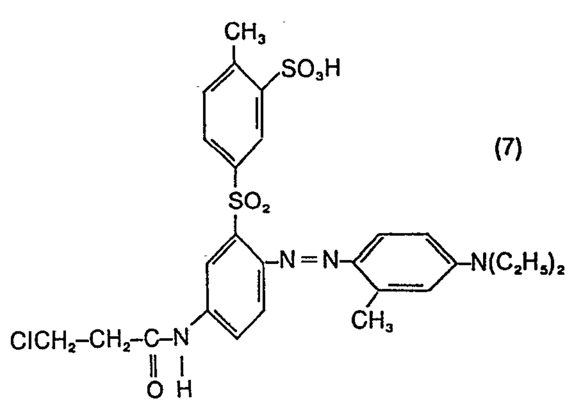

(7)

10. The monoazo dye according to claim 3 of the formula

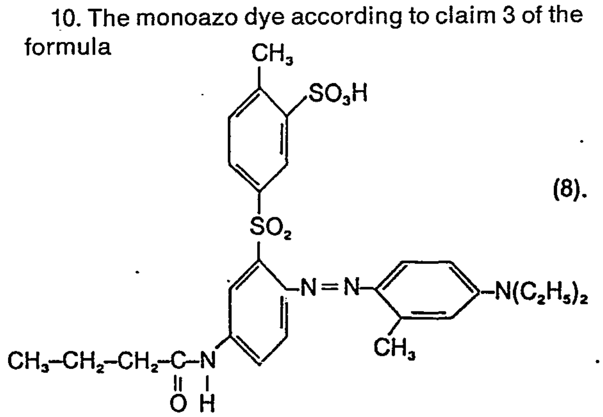

(8).

11. A process for the preparation of a monoazo dye of the formula

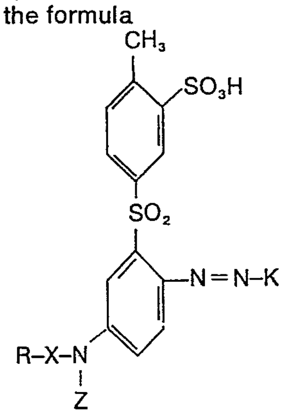

(1)

in which K is the radical of a coupling component of the aminobenzene, alkoxybenzene, hydroxybenzene, pyrazolone, aminopyrazole, pyrimidine, indole or acetoacetamide series, R is a substituted or unsubstituted $C_{1-12}$ alkyl, cycloalkyl, aralkyl or aryl radical, X is a –CO– or $-SO_2-$ group,

a 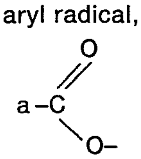 group,

R being attached to the oxygen atom, or an $-SO_2NH-$ or

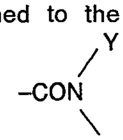 group,

R being attached to the nitrogen atom and Y being hydrogen or $C_{1-4}$ alkyl, and Z is hydrogen or $C_{1-4}$ alkyl, which process comprises diazotising a diazo component of the formula

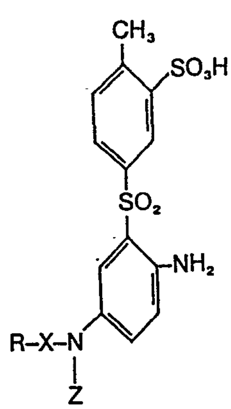

(9)

and coupling the product with a coupling component of the formula

H–K (10)

K, R, X and Z in formulae (9) and (10) being as defined for formula (1).

12. Use of an azo dye according to any one of claims 1 to 10, or of an azo dye obtained in accordance with claim 11, for dyeing or printing.

13. A process for dyeing or printing, which comprises the use of an azo dye according to claim 1.

14. A process according to claim 13 for dyeing polyamide fibres.

15. A dyeing or printing preparation containing an azo dye according to any one of claims 1 to 10.

**Revendications**

1. Colorants monoazoïques de formule

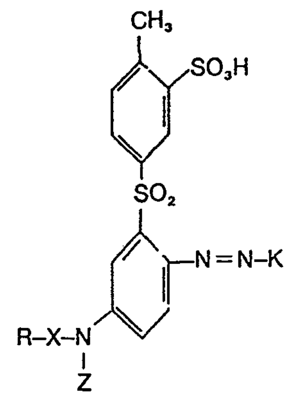

(1)

dans laquelle K est le reste d'un composant de copulation de la série aminobenzène, alcoxybenzène, hydroxybenzène, pyrazolone, aminopyrazole, pyrimidine, indole ou acétylacétamide, R est un reste éventuellement substitué alkyle en $C_{1-12}$, cycloalkyle, aralkyle ou aryle, X est un groupe –CO– ou $-SO_2$, un groupe

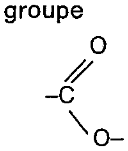,

dans lequel R est lié à l'atome d'oxygène, ou un groupe $-SO_2NH-$ ou

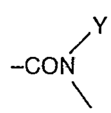,

dans lequel R est lié à l'atome d'azote, Y est l'hydrogène ou un reste alkyle en $C_{1-4}$ et Z est l'hydrogène ou un reste alkyle en $C_{1-4}$.

2. Colorants monoazoïques selon la revendication 1, dans lesquels K est un reste aminobenzène, N–$C_{1-4}$-alkylaminobenzène ou N,N-di-$C_{1-4}$-alkylaminobenzène, qui peut être substitué dans le noyau benzènique par les groupes méthyle, méthoxy, chlore, acétylamino, uréido, benzoylamino, chlorobenzoylamino et méthylphénylsulfonylamino, et dans lequel les restes N-alkyle, indépendamment les uns des autres, peuvent être substitués par les groupes hydroxy, chlore, cyano, sulfo ou phényl, un reste alcoxy-$C_{1-2}$-benzène qui peut être substitué par le groupe méthyle, un reste 2-méthylindole, 2-phénylindole,
N-octyl-2-méthylindole ou
N-méthyl-2-phénylindole,
un reste 1-phényl-3-méthylpyrazolone, qui peut être substitué dans le reste phényle par du chlore et le groupe méthyle, un reste 1-phényl-3-méthylaminopyrazole qui peut être substitué dans le reste phényle par les groupes chlore et sulfo, ou un reste 2,4,6-triaminopyrimidine, et dans lesquels R est un reste alkyle en $C_{1-7}$ qui peut être substitué par les groupes chlore, hydroxy, méthoxy ou acétyle, un reste cyclohexyle, benzyle ou phényle qui peut être substitué par les groupes méthyle, hydroxy, chlore, carboxy ou acétylamino, X est un groupe –CO– ou $-SO_2-$, un groupe

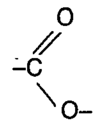 ,

dans lequel R est lié à l'atome d'oxygène, ou un groupe $-SO_2NH-$ ou

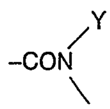 ,

dans lequel R est lié à l'atome d'azote, Y est l'hydrogène, le reste méthyle ou le reste éthyle, et Z est l'hydrogène.

3. Colorants monoazoïques selon la revendication 2, où K est un reste
4,N,N-diéthylamino-2-méthylphényl-(1),
R est un reste éthyle, β-chloroéthyle, tert.-butyle, phényle ou 4-méthylphényle et X est le groupe –CO– ou $-SO_2-$ et Z a la signification indiquée dans la revendication 2.

4. Le colorant monoazoïque selon la revendication 3 de formule

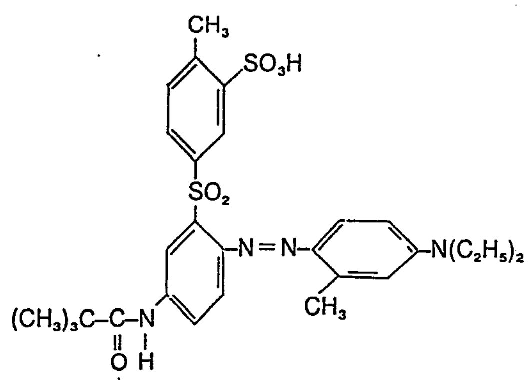

(2)

5. Le colorant monoazoïque selon la revendication 3 de formule

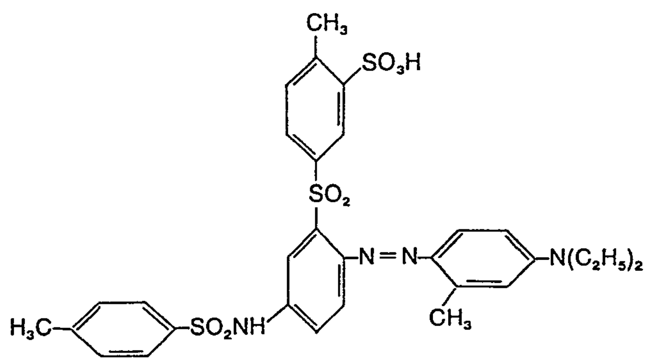

(3)

6. Le colorant monoazoïque selon la revendication 3 de formule

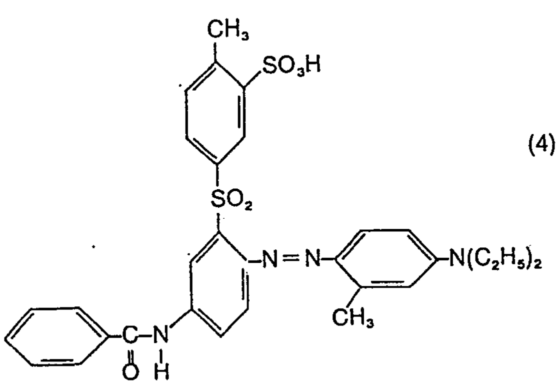

(4)

7. Le colorant monoazoïque selon la revendication 3 de formule

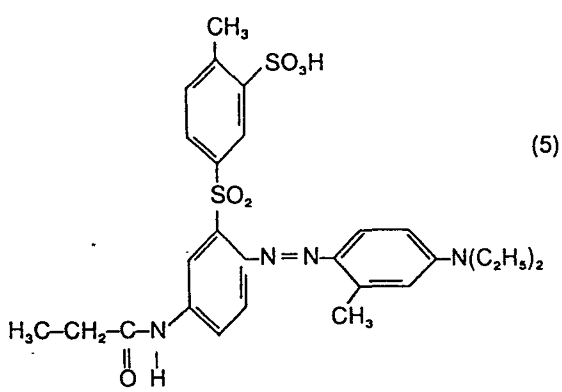

(5)

8. Le colorant monoazoïque selon la revendication 2 de formule

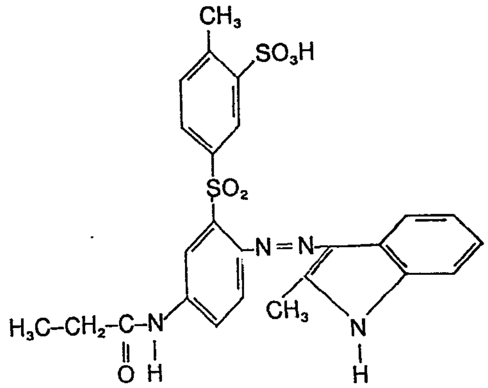

(6)

9. Le colorant monoazoïque selon la revendication 3 de formule

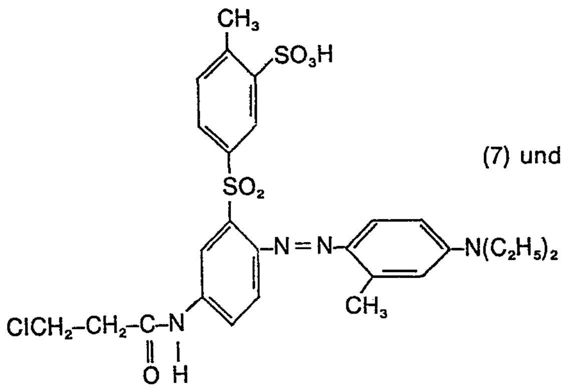

(7) und

10. Le colorant monoazoïque selon la revendication 3 de formule

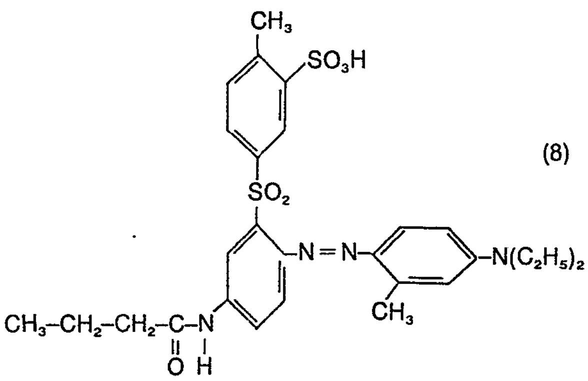

(8)

11. Procédé de fabrication des colorants monoazoïques de formule

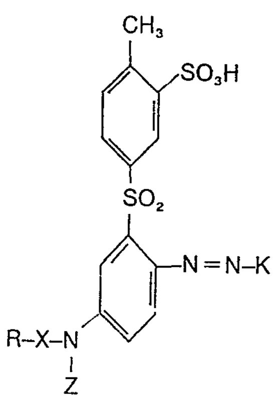

(1),

dans laquelle K est le reste d'un composant de copulation de la série aminobenzène, alcoxybenzène, hydroxybenzène, pyrazolone, aminopyrazole, pyrimidine, indole ou acétylacétamide, R est un reste éventuellement substitué alkyle en $C_{1-12}$, cycloalkyle, aralkyle ou aryle, K est un groupe $-CO-$ ou $-SO_2-$, un groupe

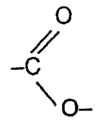

,

dans lequel R est lié à l'atome d'oxygène, ou un groupe $-SO_2NH-$ ou

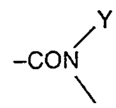

,

dans lequel R est lié à l'atome d'azote, Y est l'hydrogène ou un reste alkyle en $C_{1-4}$, et Z est l'hydrogène ou un reste alkyle en $C_{1-4}$, caractérisé par le fait que l'on diazote un composant diazoïque de formule

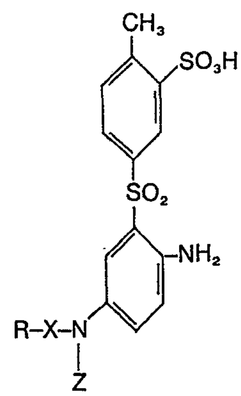

(9)

et qu'on le copule sur un composant de copulation de formule

H–K, (10)

K, R, X et Z dans les formules (9) et (10) ayant les significations indiquées dans la formule (1).

12. Utilisation des colorants azoïques selon les revendications 1 à 10 ou des colorants azoïques obtenus selon la revendication 11 pour la teinture et l'impression.

13. Procédé de teinture et d'impression utilisant les colorants azoïques selon la revendication 1.

14. Procédé selon la revendication 13 pour teindre les fibres de polyamide.

15. Préparations de teinture et d'impression qui contiennent les colorants azoïques selon les revendications 1 à 10.